# EUROPEAN PATENT APPLICATION

(11) **EP 4 349 793 A1**
(43) Date of publication of application: **10.04.2024**
(21) Application number: 22816138.6
(22) Date of filing: 31.05.2022
(51) Int. Cl.: C03C 27/12, B32B 7/023, B32B 17/10, B32B 27/30, B60J 1/00, B60K 35/00, C08J 5/18, G02B 27/01, G03B 21/62

(54) **RESIN FILM, LAMINATED GLASS, AND SCREEN**

(30) Priority: 01.06.2021 JP 2021092628; 11.06.2021 JP 2021098219
(71) Applicant: SEKISUI CHEMICAL CO., LTD., Osaka-shi Osaka 530-8565 (JP)
(72) Inventor: OOTA, Yuusuke, Koka-shi, Shiga 528-8585 (JP)
(74) Representative: Ter Meer Steinmeister & Partner
(86) International application number: PCT/JP2022/022236
(87) International publication number: WO 2022/255392

(57) **Abstract**

A resin film comprising a light diffusion layer comprising a light diffusion particle and a thermoplastic resin, wherein, when a laminated glass obtained by adhesion of two sheets of clear glass having a thickness of 2.5 mm with the resin film being interposed is irradiated with simulated solar light by a solar simulator, an x value and a y value of chromaticity coordinates (CIE193 1) of transmitted light are respectively 0.25 or more and 0.4 or less and 0.25 or more and 0.4 or less.

## Description

### Technical Field

The present invention relates to a resin film, a laminated glass and a screen each suitably usable in, for example, a screen for image display.

### Background Art

Laminated glass is widely used in window glass for various conveyances such as automobiles, railway vehicles, airplanes and marine vessels, and window glass for buildings and the like, because laminated glass is less prone to causing glass fragments to scatter even if it is subjected to an external impact and then broken, and is thus safe. Such laminated glass as is widely known is commonly one obtained by interposing an interlayer film for laminated glass configured from, for example, a thermoplastic resin, between paired sheets of glass, and then integrating the sheets of glass with the interlayer film.

A technique for producing an image projected from a projector on a transparent screen is in practical use. In recent years, there has been increased a need for projection and display of advertising and the like on, for example, window glass for vehicles such as automobiles, and window glass for buildings such as partitions and show windows, and laminated glass has been tried to be used for transparent screens. For example, PTL 1 discloses use of, as a transparent screen, a laminated glass comprising two transparent base materials such as glass plates, and a resin film placed as an interlayer film between the transparent base materials, in which the resin film comprises a light diffusible fine particle.

### Citation List

### Patent Literature

PTL 1: WO 2016/143566

### Summary of Invention

### Technical Problem

However, a laminated glass for use in a transparent screen has the problem of being incapable of imparting sufficiently high color reproducibility in image display even by compounding of a light diffusible fine particle in the resin film constituting the interlayer film as described above.

An object of the present invention is to provide a resin film which can allow image display high in color reproducibility to be realized even in use for a screen for image display, and a laminated glass and a screen each comprising the resin film.

### Solution to Problem

The present inventors have made intensive studies, and as a result, have found that the above problems can be solved by the following configuration, leading to completion of the present invention. The gist of the present invention is as follows.
[1] A resin film comprising a light diffusion layer comprising a light diffusion particle and a thermoplastic resin, wherein,
   when a laminated glass obtained by adhesion of two sheets of clear glass having a thickness of 2.5 mm with the resin film being interposed is irradiated with simulated solar light by a solar simulator, an x value and a y value of chromaticity coordinates (CIE1931) of transmitted light are respectively 0.25 or more and 0.4 or less and 0.25 or more and 0.4 or less.
[2] The resin film according to [1], wherein, when the laminated glass is irradiated with simulated solar light by a solar simulator, a ratio of a maximum intensity A at 430 to 460 nm to a maximum intensity B at 530 to 560 nm (maximum intensity A/maximum intensity B) of transmitted light is 1.0 or less.
[3] The resin film according to [1] or [2], wherein, when the laminated glass is irradiated with simulated solar light by a solar simulator, a ratio of a maximum intensity A at 430 to 460 nm to a maximum intensity C at 560 to 600 nm (maximum intensity A/maximum intensity C) of transmitted light is 1.2 or less.
[4] The resin film according to any one of [1] to [3], wherein a content of the light diffusion particle in 100% by mass of the resin film is 0.00001% by mass or more and 1% by mass or less.
[5] The resin film according to any one of [1] to [4], wherein the light diffusion particle is at least one selected from the group consisting of a nanoparticle comprising at least any of a silver element and a titanium element, or nanodiamond.
[6] The resin film according to any one of [1] to [5], wherein, when a thickness of the light diffusion layer is measured at an interval of 5 cm in one direction along a surface direction, a difference between a maximum thickness and a minimum thickness of the light diffusion layer is 40 µm or less.
[7] The resin film according to any one of [1] to [6], further comprising at least one additive selected from the group consisting of an ultraviolet absorber, an antioxidant, and a light stabilizer.
[8] The resin film according to [7], wherein the ultraviolet absorber is a benzotriazole-based compound.
[9] The resin film according to [7] or [8], wherein the antioxidant is a phenol-based compound.
[10] The resin film according to any one of [1] to [9], wherein the thermoplastic resin comprised in the light diffusion layer is a polyvinyl acetal resin.
[11] The resin film according to any one of [1] to [10], wherein the light diffusion layer further comprises a plasticizer.
[12] The resin film according to any one of [1] to [11], comprising three or more resin layers each comprising a thermoplastic resin, wherein
   the three or more resin layers comprise the light diffusion layer and second and third resin layers, and
   the light diffusion layer is placed between the second and third resin layers.
[13] The resin film according to [12], wherein
   a content of the plasticizer based on 100 parts by mass of the thermoplastic resin in the light diffusion layer is higher than each content of the plasticizer based on 100 parts by mass of the thermoplastic resin in each of the second and third resin layers.
[14] The resin film according to [12] or [13], wherein the thermoplastic resin comprised in each of the second and third resin layers is a polyvinyl acetal resin.
[15] The resin film according to [12] or [13], wherein the thermoplastic resin comprised in each of the second and third resin layers is at least one selected from the group consisting of a polyvinyl acetal resin, an ethylene-vinyl acetate copolymer resin, an ionomer resin, a polyurethane resin, and a thermoplastic elastomer.
[16] The resin film according to any one of [1] to [15], wherein the thermoplastic resin comprised in the light diffusion layer is at least one selected from the group consisting of a polyvinyl acetal resin, an ethylene-vinyl acetate copolymer resin, an ionomer resin, a polyurethane resin, and a thermoplastic elastomer.
[17] The resin film according to any one of [1] to [16], wherein a haze value of a laminated glass obtained by adhesion of two sheets of clear glass having a thickness of 2.5 mm with the resin film being interposed is 6% or less.
[18] The resin film according to any one of [1] to [17], wherein a transmittance of a laminated glass obtained by adhesion of two sheets of clear glass having a thickness of 2.5 mm with the resin film being interposed is 70% or more.
[19] The resin film according to any one of [1] to [18], wherein, when a laminated glass obtained by adhesion of two sheets of clear glass having a thickness of 2.5 mm with the resin film being interposed is irradiated with simulated solar light by a solar simulator, a brightness is 50 cd/m² or more.
[20] The resin film according to any one of [1] to [19], wherein the light diffusion particle is a core-shell particle.
[21] The resin film according to any one of [1] to [20], wherein the light diffusion particle is a core-shell metal particle in which at least any of a metal particle and a metal oxide particle serves as a core and a material comprising at least one selected from the group consisting of semimetal or metal oxide serves as a shell.
[22] The resin film according to [21], wherein the core is a core-shell particle comprising a silver element or a titanium element, or both a silver element and a titanium element.
[23] The resin film according to [21] or [22], wherein the shell is a core-shell particle comprising any one of silica, alumina or and a mixture thereof, and a composite of silica, alumina and a mixture thereof, with a polymer.
[24] The resin film according to any one of [1] to [23], wherein an average particle size of the light diffusion particle is 1 nm or more and 100 µm or less.
[25] The resin film according to any one of [1] to [24], wherein an average particle size of the light diffusion particle is 1 nm or more and 1000 nm or less.
[26] The resin film according to any one of [1] to [25], wherein a content of the light diffusion particle in 100% by mass of the resin film is 0.0001% by mass or more and 0.01% by mass or less.
[27] The resin film according to any one of [1] to [26], wherein a content of the light diffusion particle in the light diffusion layer is 0.00005% by mass or more and 2% by mass or less in 100% by mass of the light diffusion layer.
[28] The resin film according to any one of [1] to [27], wherein a content of the light diffusion particle in the light diffusion layer is 0.0005% by mass or more and 0.1% by mass or less in 100% by mass of the light diffusion layer.
[29] The resin film according to any one of [1] to [28], wherein a thickness of the light diffusion layer is 20 µm or more and 400 µm or less.
[30] The resin film according to any one of [1] to [29], wherein a thickness of the resin film is 100 µm or more and 3.0 mm or less.
[31] The resin film according to any one of [1] to [30], wherein the resin film is an interlayer film for laminated glass.
[32] A laminated glass comprising the resin film according to any one of [1] to [31] and paired glass members, wherein the resin film is placed between the paired glass members.
[33] A screen, wherein an x value and a y value of chromaticity coordinates (CIE1931) of transmitted light in irradiation with simulated solar light by a solar simulator are respectively 0.25 or more and 0.4 or less and 0.25 or more and 0.4 or less.
[34] The screen according to [33], wherein a haze value is 6% or less.
[35] The screen according to [33] or [34], wherein a transmittance is 70% or more.
[36] The screen according to any one of [33] to [35], wherein a brightness in irradiation with simulated solar light by a solar simulator is 50 cd/m² or more.
[37] The screen according to any one of [33] to [36], wherein a ratio of a maximum intensity A at 430 to 460 nm to a maximum intensity B at 530 to 560 nm (maximum intensity A/maximum intensity B) of transmitted light in irradiation with simulated solar light by a solar simulator is 1.0 or less.
[38] The screen according to any one of [33] to [37], wherein a ratio of a maximum intensity A at 430 to 460 nm to a maximum intensity C at 560 to 600 nm (maximum intensity A/maximum intensity C) of transmitted light in irradiation with simulated solar light by a solar simulator is 1.2 or less.
[39] The screen according to any one of [33] to [38], comprising a resin film comprising a light diffusion layer comprising a light diffusion particle and a thermoplastic resin.
[40] A window glass comprising the resin film according to any one of [1] to [31], the laminated glass according to [32], or the screen according to any one of [33] to [39].
[41] An image display system comprising the laminated glass according to [32], or the screen according to any one of [33] to [39], and a light source apparatus.

### Advantageous Effects of Invention

According to the present invention, there can be provided a resin film, a laminated glass and a screen, in which image display with a high color reproducibility is realized.

### Brief Description of Drawings

[Fig. 1] A schematic cross-sectional view illustrating one embodiment of the resin film and the laminated glass of the present invention.
[Fig. 2] A schematic cross-sectional view illustrating one embodiment of the resin film and the laminated glass of the present invention.
[Fig. 3] A schematic cross-sectional view illustrating one embodiment of the resin film and the laminated glass of the present invention.
[Fig. 4] A schematic view illustrating an image display system according to one embodiment of the present invention.
[Fig. 5] A schematic view illustrating a method for measuring chromaticity, brightness, and maximum intensities A, B and C.

### Description of Embodiments

Hereinafter, the present invention is described in detail with reference to embodiments.

### <Resin film>

The resin film of the present invention comprises a light diffusion layer comprising a light diffusion particle and a thermoplastic resin. The resin film of the present invention is preferably used in a screen for image display, as described below. The resin film of the present invention, which comprises a light diffusion layer comprising a light diffusion particle, thus can allow light, with which the resin film is irradiated, to be diffused in the light diffusion layer, and thus allow an image corresponding to the light for irradiation to be displayed on a screen comprising the present film, by the light diffused.

The resin film is preferably an interlayer film for laminated glass, as described below, and, in particular, is more preferably used in a screen for image display, configured by laminated glass.

The resin film of the present invention is one wherein, when a laminated glass produced by adhesion of two sheets of clear glass having a thickness of 2.5 mm (hereinafter, also referred to as "standard glass") with the resin film being interposed is irradiated with simulated solar light, an x value and a y value of chromaticity coordinates (CIE1931) of transmitted light are respectively 0.25 or more and 0.4 or less and 0.25 or more and 0.4 or less.

Herein, the simulated solar light for irradiation is emitted from a solar simulator. The standard glass is clear glass having a thickness of 2.5 mm according to JIS R 3211 (1998), and specifically one having a visible light transmittance of 90.4% is used.

The simulated solar light by a solar simulator is white light, and, when any one of the x value and the y value is less than 0.25 or more than 0.4, the white light cannot be reproduced by light scattered on the resin film. Thus, when the resin film is used in a screen for screen display, no image display high in color reproducibility can be made.

The x value is preferably 0.28 or more, more preferably 0.3 or more, and preferably 0.39 or less, more preferably 0.38 or less, further preferably 0.35 or less from the viewpoint of an enhancement in color reproducibility.

The y value is preferably 0.28 or more, more preferably 0.3 or more, still further preferably 0.32 or more, and preferably 0.39 or less, more preferably 0.38 or less from the viewpoint of an enhancement in color reproducibility.

The x value and the y value may be such that values in irradiation of any one surface of laminated glass with simulated solar light and chromaticity measurement on other surface thereof are in the above ranges. The same also applies to measurement of maximum intensity ratio and brightness which are described below, and the maximum intensity ratio and the brightness may be each determined by irradiation of a surface opposite to a surface to be subjected to measurement, with simulated solar light, and measurement of the maximum intensity ratio and the brightness.

Examples of the method for adjusting the x value and the y value in the above ranges include the use of a light diffusion particle being composite described below and control of a particle size distribution of such a light diffusion particle. Specifically, the x value and the y value can be adjusted in the above ranges by decreasing a particle of 10 nm or less. The composite here does not mean that two or more kinds of light diffusion particles are comprised, but means that a light diffusion particle where two or more kinds of compositions are combined is used.

### (Maximum intensity ratio)

It is preferable in the resin film of the present invention that, when a laminated glass produced by adhesion of two sheets of standard glass with the resin film being interposed is irradiated with simulated solar light by a solar simulator, the ratio of the maximum intensity A at 430 to 460 nm to the maximum intensity B at 530 to 560 nm (maximum intensity A/maximum intensity B) of transmitted light be 1.0 or less.

A wavelength of 430 to 460 nm is a wavelength at which blue light appears, and a wavelength of 530 to 560 nm is a wavelength at which green light appears. Accordingly, the maximum intensity A/maximum intensity B is 1.0 or less, and thus blue light is prevented from being excessively diffused by a light diffusion particle as compared with green light. Therefore, the x value and the y value are easily adjusted in the predetermined ranges, and color reproducibility is enhanced.

The maximum intensity A/maximum intensity B is more preferably 0.9 or less, further preferably 0.8 or less from the viewpoint of an enhancement in color reproducibility.

The maximum intensity A/maximum intensity B is preferably 0.1 or more, further preferably 0.3 or more, still further preferably 0.5 or more from the viewpoint of prevention of excessive diffusion of green light by a light diffusion particle and an enhancement in color reproducibility.

It is preferable in the resin film of the present invention that, when a laminated glass produced by adhesion of two sheets of standard glass with the resin film being interposed is irradiated with simulated solar light by a solar simulator, the ratio of the maximum intensity A at 430 to 460 nm to the maximum intensity C at 560 to 600 nm (maximum intensity A/maximum intensity C) of transmitted light be 1.2 or less.

A wavelength of 430 to 460 nm is a wavelength at which blue light appears, and a wavelength of 560 to 600 nm is a wavelength at which red light appears. Accordingly, the maximum intensity A/maximum intensity C is 1.2 or less, and thus blue light is prevented from being excessively diffused by a light diffusion particle as compared with red light. Therefore, the x value and the y value are easily adjusted in the predetermined ranges, and color reproducibility is enhanced.

The maximum intensity A/maximum intensity C is more preferably 1.1 or less, further preferably 1.05 or less from the viewpoint of an enhancement in color reproducibility.

The maximum intensity A/maximum intensity C is preferably 0.2 or more, further preferably 0.4 or more, still further preferably 0.6 or more from the viewpoint of prevention of excessive diffusion of red light by a light diffusion particle and an enhancement in color reproducibility.

The maximum intensities A, B and C are values of the respective maximum intensities in a wavelength region of 430 to 460 nm, a wavelength region of 530 to 560 nm, and a wavelength region of 560 to 600 nm.

The above maximum intensity ratio can be adjusted in the above predetermined range by appropriately selecting the type, particle size, particle size distribution, and the like of a light diffusion particle comprised in the resin film. For example, composite use with a light diffusion particle and control of a particle size distribution of a light diffusion particle are exemplified as described above.

### (Transmittance)

In the resin film of the present invention, the transmittance of a laminated glass produced by adhesion of two sheets of standard glass with the resin film being interposed is preferably 70% or more. The transmittance means a visible light transmittance and can be determined by measurement according to JIS R3212 (2015).

The transmittance is 70% or more, and thus certain transparency can be retained and suitable use in various types of window glass can be made, for example, use in a windshield for automobiles can also be made. The transmittance is more preferably 75% or more, further preferably 80% or more from the viewpoint that higher transparency is ensured.

The higher the transmittance is, the better, from the viewpoint that transparency of the resin film is ensured, and is practically 99% or less and is preferably 97% or less from the viewpoint that light is appropriately diffused in the resin film.

### (Haze value)

In the resin film of the present invention, the haze value of a laminated glass produced by adhesion of two sheets of standard glass with the resin film being interposed is preferably 15% or less. The haze value is equal to or less than the upper limit value, and thus transparency of the resin film can be ensured. The haze value is more preferably 10% or less, further preferably 6% or less, still further preferably 4% or less, from the viewpoint of a more enhancement in transparency. The haze value is, for example, 0.5% or more, preferably 1% or more, more preferably 2% or more from the viewpoint that a certain amount of light is diffused by the light diffusion particle to appropriately perform image display. The haze value can be here measured according to JIS K6714.

### (Brightness)

It is preferable in the resin film of the present invention that, when a laminated glass produced by adhesion of two sheets of standard glass with the resin film being interposed is irradiated with simulated solar light by a solar simulator, the brightness be 50 cd/m² or more. The brightness is equal to or more than the lower limit value, and thus an image can be clearly displayed when the resin film of the present invention is used in a screen for screen display. The brightness is more preferably 100 cd/m² or more, further preferably 150 cd/m² or more. The brightness is preferably 10,000 cd/m² or less. The brightness is equal to or less than the upper limit value, and thus external light or the like can be prevented from being excessively diffused on the resin film and generating stray light or the like, when the resin film is used in window glass or the like. The brightness is more preferably 8,000 cd/m² or less, further preferably 5,000 cd/m² or less. The method for measuring the brightness is performed in the same conditions as those of chromaticity measurement except that the output of a light source used in Examples is set to 30%.

### [Light diffusion particle]

Examples of the light diffusion particle for use in the resin film of the present invention include particles of semimetal or metal oxides, for example, silicon oxide such as silica, zirconium oxide, titanium oxide, aluminum oxide such as alumina, magnesium oxide, and cerium oxide, particles of metals such as aluminum, silver, platinum, gold, titanium, nickel, tin, indium, and a tin-cobalt alloy, and diamond particles. Such a particle is used, and thus not only transparency of the resin film is ensured, but also light diffusivity, color reproducibility, and the like are improved. In particular, a metal particle, a metal oxide particle, and a diamond particle are preferable from the viewpoint of transparency, light diffusivity, color reproducibility, and the like.

The metal element used in such a metal or metal oxide particle is preferably a silver element or a titanium element, and therefore a particle comprising at least any of a silver element and a titanium element, or a diamond particle is preferable, in particular, a silver particle, a titanium oxide particle, a titanium particle, or a diamond particle is more preferable, and a silver particle or a titanium oxide particle is particularly preferable.

The light diffusion particle may be a core-shell particle. For example, the light diffusion particle may be a core-shell particle where any of the above semimetal or metal oxide particles, metal particles, diamond particles, and the like serves as a core and is coated with a different material.

More specifically, the light diffusion particle may be a metal particle (core-shell particle) where the metal particle serves as a core and the above semimetal or metal oxide or a composite of the semimetal or metal oxide with a polymer serves as a shell. The light diffusion particle may be a metal particle (core-shell particle) where the metal oxide particle serves as a core and the above semimetal or metal oxide or a composite of the semimetal or metal oxide with a polymer serves as a shell. In this case, a particle comprising metal and metal oxide may serve as a core instead of the metal oxide particle.

The light diffusion particle may be a core-shell particle in which the semimetal or metal oxide serves as a core and metal serves as a shell.

Furthermore, the light diffusion particle may be a core-shell particle where silica, alumina and a mixture thereof serve as a shell, or a core-shell particle where a composite of silica, alumina and a mixture thereof, with a polymer, serves as a shell. The light diffusion particle may be one comprising a core-shell particle where the mixture serves as a shell and a core-shell particle where the composite serves as a shell. In particular, a metal particle (core-shell particle) where the metal particle serves as a core is preferable. A metal oxide particle (core-shell particle) where the metal oxide particle serves as a core is also preferable. Furthermore, a core-shell particle where a particle comprising both metal and metal oxide serves as a core may also be adopted. More specifically, the light diffusion particle may be a core-shell particle where a particle comprising a silver element such as silver serves as a core, may be a core-shell particle where a particle comprising a titanium element such as titanium oxide serves as a core, or may be a core-shell particle where a particle comprising both a silver element and a titanium element serves as a core.

For example, the silver particle (preferably a silver nanoparticle described below) may be a particle where the silver particle serves as a core and silica, alumina or a mixture thereof, a composite of silica, alumina or a mixture thereof, with a polymer such as polyvinylpyrrolidone, or the like serves as a shell. The core-shell particle may be a particle where silica serves as a core and silver or other metal serves as a shell.

The light diffusion particle may be used singly or in combinations of two or more kinds thereof.

The average particle size of the light diffusion particle is preferably, for example, 1 nm or more and 100 µm or less. The average particle size is in the above range, and thus visible light is appropriately diffused by the light diffusion particle and color reproducibility in image display can be improved. The average particle size of the light diffusion particle is preferably 3 nm or more and 50 µm or less, more preferably 5 nm or more and 20 µm or less, further preferably 10 nm or more and 5 µm or less from the viewpoint of an improvement in color reproducibility.

The average particle size of the light diffusion particle can be here measured by a laser diffraction/scattering method.

The light diffusion particle is preferably a so-called nanoparticle from the viewpoint of appropriate diffusion of visible light. Accordingly, the light diffusion particle is more preferably a nanoparticle comprising at least any of a silver element and a titanium element, further preferably a silver nanoparticle, a titanium oxide nanoparticle, or nanodiamond, in particular, particularly preferably a silver nanoparticle. The nanoparticle is here a particle having an average particle size of 1 µm or less (1000 nm or less), and the average particle size of the nanoparticle is preferably 900 nm or less. The lower limit value of the average particle size of the nanoparticle is as described with respect to the above light diffusion particle, and the average particle size of the nanoparticle may be 50 nm or more, or may be 110 nm or more.

The light diffusion particle here used may be of two or more kinds of particles different in composition from each other, preferably, three or more kinds of particles different in composition from one another so that the x value and the y value are in the above ranges. For example, the core-shell particle here used may be of at least two, preferably three kinds of particles which are the same in terms of the materials of the core and the shell and in which the respective mass proportions of the shells in the particles are different from one another.

The particle size distribution of the light diffusion particle may be appropriately adjusted so that the x value or the y value is in the above range.

The content of a particle having a small particle size is favorably low and, in particular, the content of a particle of 10 nm or less is favorably low from the viewpoint of an enhancement in color reproducibility. When the particle of 10 nm or less is contained more, light at a shorter wavelength is more easily dispersed. Two or more kinds of light-scattering particles different in average particle size may also be mixed from the viewpoint that both transparency and display ability are satisfied.

The shape of the light diffusion particle is not particularly limited, and may be a flake-like shape such as a plate-like or scale-like shape, or may be a spherical shape or a shape approximate to a spherical shape (substantially spherical shape), a polyhedral shape or a shape approximate to a polyhedron (for example, a shape where a polyhedron is partially in the form of a curved plane, a substantial polyhedron), an amorphous shape, or the like.

The light diffusion particle may have, for example, an aspect ratio of less than 3, preferably 2 or less. The light diffusion particle, which is reduced in aspect ratio, thus is easily improved in light diffusivity with the haze being low. Here, the light diffusion particle, which is spherical or substantially spherical, generally has an aspect ratio of 2 or less, which is a value close to 1.

The aspect ratio may be determined as the ratio of the longer size to the shorter size of the particle, and may be measured as longer size/thickness in the case of a flake-like light diffusion particle. The aspect ratio may be here determined by, for example, subjecting 50 particles to measurement by observation with a microscope such as SEM and determining the average value.

The content of the light diffusion particle in the entire resin film is preferably 0.00001% by mass or more and 1% by mass or less in 100% by mass of the resin film. The content of the light diffusion particle is equal to or more than the lower limit value, and thus light can be properly diffused in the resin film and an image can be appropriately displayed. The content is equal to or less than the upper limit value, and thus transparency of the resin film can be ensured and the haze value and the transmittance can be easily adjusted in the above desired ranges without excess shielding of light by the light diffusion particle. The content of the light diffusion particle in 100% by mass of the resin film is more preferably 0.00005% by mass or more, further preferably 0.0001% by mass or more, still further preferably 0.0008% by mass or more, and more preferably 0.5% by mass or less, further preferably 0.1% by mass or less, still further preferably 0.09% by mass or less, still further preferably 0.05% by mass or less, particularly preferably 0.01% by mass or less, from the above viewpoints.

The content of the light diffusion particle in the light diffusion layer is preferably 0.00005% by mass or more and 2% by mass or less in 100% by mass of the light diffusion layer. The content of the light diffusion particle in the light diffusion layer is equal to or more than the lower limit value, and thus light can be properly diffused in the light diffusion layer and an image can be appropriately displayed. The content is equal to or less than the upper limit value, and thus transparency of the resin film is easily ensured without excess shielding of light by the light diffusion particle. The content of the light diffusion particle in 100% by mass of the light diffusion layer is more preferably 0.0001% by mass or more, further preferably 0.0005% by mass or more, still further preferably 0.005% by mass or more and more preferably 1 mass or less, further preferably 0.5% by mass or less, still further preferably 0.1% by mass or less, still further preferably 0.09% by mass or less, particularly preferably 0.03% by mass or less, from the above viewpoints.

### [Layer configuration]

The resin film of the present invention comprises one, or two or more resin layers each comprising a thermoplastic resin, and one of the layers is a light diffusion layer comprising a light diffusion particle and a thermoplastic resin. In other words, the resin film may be a resin film including a single layer of the light diffusion layer, or may comprise two or more resin layers, in which one of the layers is the light diffusion layer.

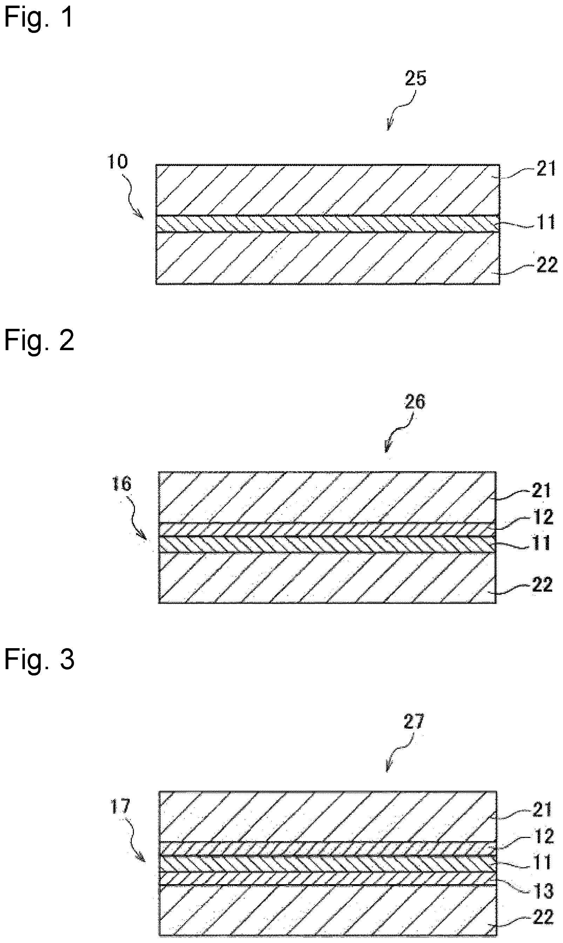

Hereinafter, a specific example of the layer configuration of the resin film is described with reference to the drawings. Fig. 1 illustrates a resin film 10 comprising a resin layer being a single layer, as a resin layer. The resin film 10 includes a light diffusion layer (first resin layer) 11, and, for example, when the resin film is used in laminated glass, both surfaces of the light diffusion layer 11 may adhere to glass members 21 and 22 for forming laminated glass 25.

Fig. 2 illustrates a resin film 16 comprising two resin layers as a resin layer. The resin film 16 comprises a second resin layer 12 in addition to the light diffusion layer 11, as illustrated in Fig. 2. The second resin layer 12 is provided on one surface of the first resin layer 11. For example, in the case of use in laminated glass, a surface of the second resin layer 12, located opposite to the light diffusion layer 11 side, and a surface of the light diffusion layer 11, located opposite to the second resin layer 12 side, may serve as adhesion surfaces for adhesion to glass members 21 and 22 for constituting laminated glass 20, in the resin film 16.

Fig. 3 illustrates a resin film 17 comprising three resin layers as a resin layer. The resin film 17 comprises a third resin layer 13 in addition to the light diffusion layer 11 and the second resin layer 12. The third resin layer 13 is provided on a surface (other surface) of the light diffusion layer 11, located opposite to one surface on which the second resin layer 12 is provided. In other words, the light diffusion layer 11 is placed between the second resin layer 12 and the third resin layer 13. For example, in the case of use in laminated glass, outside surfaces of the second resin layer 12 and the third resin layer 13 (namely, surfaces opposite to surfaces on which the light diffusion layer 11 is provided) may serve as surfaces for adhesion to glass members 21 and 22 for constituting laminated glass 27, in the resin film 17.

The resin film may comprise four or more resin layers, and, in this case, may comprise one or more resin layers further outside one of or both the second and third resin layers 12 and 13, in which a resin layer as the outermost layer may serve as an adhesion surface with a glass member.

An embodiment is preferable where the resin film comprises at least three resin layers, as in a resin film 17. Such an embodiment allows other resin layer to be provided on each of both surfaces of the first resin layer (light diffusion layer) 11, to thereby allow a resin layer other than the light diffusion layer 11 comprising the light diffusion particle to adhere to the glass members 21 and 22 in laminated glass, resulting in an improvement in adhesiveness to the glass members 21 and 22. The amount of a plasticizer, the amount of hydroxyl group in a polyvinyl acetal-based resin, and the like in each of the resin layers are adjusted to thereby easily impart sound insulating performance and/or the like to the resin film.

Herein, the resin film may comprise a layer other than the above resin layers, and, for example, any other layer such as an adhesion layer or a barrier layer may be placed between the resin layers. Other layers such as an adhesion layer may also be placed between each of the glass members and each of the resin layers.

An example where the resin film is used as an interlayer film for laminated glass, in laminated glass, is described in the description of the foregoing layer configuration, but the resin film is not needed to be used as an interlayer film for laminated glass. For example, the resin film may be used in an application of so-called outer sticking. In other words, one surface of the resin film may adhere to a surface of a glass member, whereas other surface thereof is not necessarily needed to adhere to a glass member.

The light diffusion layer (first resin layer) comprises a thermoplastic resin as described above, and the light diffusion particle is dispersed in the thermoplastic resin. The light diffusion layer comprises the thermoplastic resin, to thereby allow the first resin layer to easily adhere to other resin layer, a glass member, and the like. In the following description, the thermoplastic resin for use in the light diffusion layer (first resin layer) may be described as a thermoplastic resin (1).

The thermoplastic resin (1) for use in the light diffusion layer (first resin layer) is not particularly limited, and examples thereof include a polyvinyl acetal resin, an ethylene-vinyl acetate copolymer resin, an ionomer resin, a polyurethane resin, and a thermoplastic elastomer. Such a resin is used, and thus adhesiveness of the first resin layer to other resin layer, a glass member, and the like is easily ensured, and suitable use as an interlayer film for laminated glass can be made. In particular, the thermoplastic resin (1) is preferably a polyvinyl acetal resin. A polyvinyl acetal resin is used, and thus adhesiveness to a glass member, in particular, adhesiveness in the case of inorganic glass as the glass member is easily improved, and particularly suitable use as an interlayer film for laminated glass can be made. In addition, characteristics necessary for laminated glass, such as penetration resistance and sound insulating performance, are easily obtained.

The thermoplastic resin used as the thermoplastic resin (1) in the first resin layer may be used singly or in combinations of two or more kinds thereof. The detail of the thermoplastic resin for use in the first resin layer is described below.

The first resin layer in the present invention preferably further comprises a plasticizer. The plasticizer comprised in the first resin layer may be referred to as "plasticizer (1)". The first resin layer comprises the plasticizer (1), and thus is flexible, and as a result, allows laminated glass to be enhanced in flexibility and easily enhanced in penetration resistance and sound insulating performance in use of the resin film as an interlayer film for laminated glass. By comprising the light diffusion particle and the plasticizer, the contrast of an image displayed, in use of the resin film in a screen for image display, can be much further increased. Such an increase is considered to be due to an increase in difference in refractive index between the first resin layer and the light diffusion particle by inclusion of the plasticizer.

The first resin layer comprises the plasticizer, thereby enabling adhesiveness to, for example, a glass member forming laminated glass, or other resin layer and the like forming the resin film to be enhanced. The plasticizer (1) is particularly effective when comprised in the case of use of a polyvinyl acetal resin (1) as the thermoplastic resin (1). The detail of the plasticizer (1) is described below.

The content (hereinafter, sometimes designated as "content (1)") of the plasticizer (1) in the first resin layer based on 100 parts by mass of the thermoplastic resin (1) is, for example, 20 parts by mass or more, preferably 30 parts by mass or more, more preferably 40 parts by mass or more. The content (1) is each equal to or more than the lower limit, and thus the resin film is enhanced in flexibility and the resin film is easily handled. The content (1) is preferably higher from the viewpoint of sound insulating performance in use as an interlayer film for laminated glass, and the content (1) is still further preferably 50 parts by mass or more from such a viewpoint. In a case where the content (1) is thus 50 parts by mass or more, the resin film preferably comprises a second resin layer, further preferably comprises second and third resin layers.

The content (1) of the plasticizer (1) is preferably 100 parts by mass or less, more preferably 90 parts by mass or less, further preferably 85 parts by mass or less, particularly preferably 80 parts by mass or less. The content (1) is equal to or less than the upper limit, and thus laminated glass is much more enhanced in penetration resistance.

The thermoplastic resin, or the thermoplastic resin and the plasticizer serve(s) as main component(s) in the first resin layer, and the total amount of the thermoplastic resin and the plasticizer is preferably 70% by mass or more, more preferably 80% by mass or more, further preferably 90% by mass or more based on the total amount of the first resin layer.

### [Resin layer other than first resin layer]

Each resin layer other than the first resin layer in the resin film is a layer comprising a thermoplastic resin. A thermoplastic resin is used as a resin in such each resin layer, thereby allowing such each resin layer to easily adhere to other resin layers, a glass member, and/or the like.

In the following description, the respective thermoplastic resins for use in the second and third resin layers may be referred to as "thermoplastic resin (2)" and "thermoplastic resin (3)".

The respective thermoplastic resins (for example, thermoplastic resins (2) and (3)) for use in the resin layers other than the first resin layer are not particularly limited, and, for example, the respective resins here used can be appropriately selected from those listed as resins each usable as the thermoplastic resin (1). In particular, a polyvinyl acetal resin is preferable. A polyvinyl acetal resin is used to thereby improve adhesiveness to a glass member, particularly, adhesiveness in the case of inorganic glass as the glass member and allow for suitable use as an interlayer film for laminated glass. In addition, characteristics necessary for an interlayer film for laminated glass, such as penetration resistance and sound insulating performance, are easily obtained.

The thermoplastic resin for use in each of the resin layers other than the first resin layer may be used singly or in combinations of two or more kinds thereof.

The type of the thermoplastic resin for use in each of the resin layers other than the first resin layer is the same as that of the thermoplastic resin (1), for example, from the viewpoint of an enhancement in adhesiveness. Accordingly, in a case where the resin film comprises the first and second resin layers and the thermoplastic resin (1) is a polyvinyl acetal resin, the thermoplastic resin (2) is also preferably a polyvinyl acetal resin. The type of the thermoplastic resin (3) is preferably the same as those of the thermoplastic resin (1) and the thermoplastic resin (2). Accordingly, in a case where the resin film comprises the first to third resin layers and the thermoplastic resin (1) is a polyvinyl acetal resin, both the thermoplastic resins (2) and (3) are preferably polyvinyl acetal resins.

The detail of the thermoplastic resin for use in each of the resin layers other than the first resin layer is described below.

Each of the resin layers other than the first resin layer in the resin film also preferably comprises a plasticizer. In other words, the second resin layer in the resin film preferably comprises a plasticizer. The third resin layer preferably comprises a plasticizer. Accordingly, in a case where the resin film comprises a plurality of resin layers, both the first and second resin layers preferably each comprise a plasticizer. In a case where the resin film comprises the first, second and third resin layers, all the first, second and third resin layers further preferably each comprise a plasticizer.

The respective plasticizers comprised in the second and third resin layers may be referred to as "plasticizer (2)" and "plasticizer (3)".

The content of the plasticizer (2) in the second resin layer based on 100 parts by mass of the thermoplastic resin (2) may be designated as "content (2)", and the content of the plasticizer (3) in the third resin layer based on 100 parts by mass of the thermoplastic resin (3) may be designated as "content (3)".

The resin film comprises the plasticizer in each of the above resin layers, and thus is flexible, and as a result, allows laminated glass to be enhanced in flexibility and also enhanced in penetration resistance in use as an interlayer film for laminated glass. Furthermore, high adhesiveness to a glass member such as a glass plate or other resin layers in the resin film can also be exhibited. In a case where a polyvinyl acetal resin is used as the thermoplastic resin also in each of the resin layers other than the first resin layer, it is particularly effective to comprise a plasticizer. The types of the plasticizers (for example, plasticizers (2) and (3)) for use in the resin layers other than the first resin layer may be each the same as or different from that of the plasticizer (1). The types of the plasticizers (for example, plasticizers (2) and (3)) for use in the resin layers other than the first resin layer may be the same as or different from each other.

The plasticizer for use in each of the resin layers other than the first resin layer may be used singly or in combinations of two or more kinds thereof.

The contents (for example, contents (2) and (3)) of the plasticizers in the resin layers other than the first resin layer based on 100 parts by mass of the thermoplastic resin are each preferably 10 parts by mass or more. The contents of the plasticizers are each equal to or more than the lower limit, and thus the resin film is enhanced in flexibility and the resin film is easily handled. The contents of the plasticizers are each more preferably 15 parts by mass or more, further preferably 20 parts by mass or more, particularly preferably 24 parts by mass or more from the above viewpoints.

The contents (for example, contents (2) and (3)) of the plasticizers in the resin layers other than the first resin layer are each preferably 60 parts by mass or less, more preferably 50 parts by mass or less, further preferably 45 parts by mass or less. The contents are each equal to or less than the upper limit, and thus the resin film is improved in mechanical characteristics such as flexural rigidity.

The content (1) of the plasticizer in the first resin layer is preferably higher than the content of the plasticizer in each of the resin layers other than the first resin layer, in order to enhance sound insulating performance of laminated glass. In other words, the content (1) of the plasticizer is preferably higher than the content (2), and the content (1) is preferably higher than the content (3).

The content (1) is further preferably higher than both the contents (2) and (3), in a case where the resin film comprises the first to third resin layers.

In a case where the content (1) is higher than the content of the plasticizer in each of the resin layers, the absolute value of the difference between the content (1) and each of the contents (for example, contents (2) and (3)) of the plasticizers in the resin layers other than the first resin layer is preferably 10 parts by mass or more, more preferably 15 parts by mass or more, further preferably 20 parts by mass or more. The absolute value of the difference between such contents is increased to thereby allow laminated glass to be easily much further enhanced in sound insulating performance. The absolute value of the difference is preferably 70 parts by mass or less, more preferably 60 parts by mass or less, further preferably 50 parts by mass or less.

The thermoplastic resin, or the thermoplastic resin and the plasticizer serve(s) as main component(s) in each of the resin layers other than the first resin layer, and the total amount of the thermoplastic resin and the plasticizer is preferably 70% by mass or more, more preferably 80% by mass or more, further preferably 90% by mass or more based on the total amount of each of the resin layers.

Each of the resin layers (for example, the second resin layer and the third resin layer) other than the first resin layer may or may not comprise the light diffusion particle, and may be designed so that the content of the light diffusion particle in the entire resin film is in the above range. Accordingly, each of the resin layers other than the first resin layer, even if comprising the light diffusion particle, preferably has a low content of the light diffusion particle, or comprises no light diffusion particle, and more preferably comprises no light diffusion particle.

Each of the resin layers other than the first resin layer comprises no light diffusion particle or, even if comprising the light diffusion particle, comprises a small amount of the light diffusion particle as described above, and thus almost no light-scattering is caused in each of the resin layers. Thus, an image displayed can be increased in contrast in use of the resin film in an image display screen. The content of the light diffusion particle in each of the resin layers (for example, each of the second resin layer and the third resin layer) other than the first resin layer is not particularly limited, and is, for example, less than 0.1% by mass, preferably less than 0.0005% by mass, more preferably less than 0.00001% by mass, further preferably 0% by mass.

### (Thickness of resin film)

The thickness of the resin film (namely, the thickness of the entire resin film) is not particularly limited, and is preferably 100 µm or more and 3.0 mm or less. The thickness of the resin film is 100 µm or more, and thus, for example, adhesiveness of the resin film, and penetration resistance and the like of laminated glass, in use as an interlayer film for laminated glass, can be improved. The thickness is 3.0 mm or less, and thus the thickness of the resin film is prevented from being excessively large and transparency is also easily ensured. The thickness of the resin film is more preferably 200 µm or more, further preferably 400 µm or more. The thickness is more preferably 2.0 mm or less, further preferably 1.5 mm or less. In the following description, the thickness of the resin film, the thickness of the light diffusion layer, and the thickness of each of the resin layers other than the first resin layer each mean the average thickness, unless particularly noted, and can be specifically measured by measurement methods described in Examples.

### (Thickness of light-scattering layer)

In the present invention, the thickness of the light diffusion layer (first resin layer) is preferably 20 µm or more and 400 µm or less. The thickness of the light diffusion layer (first resin layer) is in the above range, and thus certain light-scattering is generated in the light diffusion layer and an image is easily displayed at a proper brightness in use for a screen. The thickness of the light diffusion layer (first resin layer) is more preferably 40 µm or more, further preferably 60 µm or more, and more preferably 250 µm or less, further preferably 200 µm or less from the above viewpoints.

The thickness of the light-scattering layer is preferably almost constant in the resin film. Specifically, when the thickness of the light diffusion layer is measured at an interval of 5 cm in one direction along a surface direction, the difference between the maximum thickness and the minimum thickness of the light diffusion layer is preferably 40 µm or less, more preferably 30 µm or less, further preferably 25 µm or less. The difference between the maximum thickness and the minimum thickness of the light diffusion layer is small, and thus the transmittance and the haze value are each uniform, and an image can be displayed without unevenness in use for a screen.

The small the difference between the maximum thickness and the minimum thickness of the light diffusion layer is, the better, and it may be 0 µm or more.

Herein, the "one direction along a surface direction" represents MD (Machine Direction) in a case where MD of the light diffusion layer is determined, or represents any one direction in a case where no MD is determined.

### (Thickness of each resin layer other than the first resin layer)

The thickness of each of the resin layer(s) (for example, second resin layer, or second and third resin layers) other than the first resin layer is not particularly limited, and is preferably 50 µm or more and 1.3 mm or less. The thickness is 50 µm or more, and thus adhesiveness of the resin film, and penetration resistance and the like of laminated glass, in use as an interlayer film for laminated glass, can be improved. The thickness is 1.3 mm or less, and thus the thickness of the resin film is prevented from being excessively large and transparency is also easily ensured. The thickness of each of the resin layer(s) other than the first resin layer is more preferably 100 µm or more, further preferably 150 µm or more, and more preferably 1 mm or less, further preferably 650 µm or less from the above viewpoints.

The thickness of each of the resin layer(s) (for example, second resin layer, or second and third resin layers) other than the first resin layer is preferably more than the thickness of the first resin layer. Such resin layer(s) are/is increased in thickness, and thus sound insulating performance of laminated glass is easily ensured and adhesiveness of the resin film to a glass member is also easily enhanced. The ratio of the thickness of each of the resin layer(s) (for example, second resin layer, or second and third resin layers) other than the first resin layer relative to the thickness of the first resin layer is preferably 1.2 or more, more preferably 1.4 or more, further preferably 1.8 or more, and preferably 10 or less, more preferably 8 or less, further preferably 5 or less from the above viewpoints.

### (Polyvinyl acetal resin)

Hereinafter, the details of the respective polyvinyl acetal resins for use in the resin layers are described. In the following description, the configuration common to the respective polyvinyl acetal resins for use in the resin layers is described simply in terms of "polyvinyl acetal resin". Respective individual configurations of the polyvinyl acetal resins for use in the first, second and third resin layers are described in terms of "polyvinyl acetal resin (1)", "polyvinyl acetal resin (2)", "polyvinyl acetal resin (3)".

The polyvinyl acetal resin is obtained by acetalization of polyvinyl alcohol (PVA) with aldehyde. In other words, the polyvinyl acetal resin is preferably an acetalized product of polyvinyl alcohol (PVA). Polyvinyl alcohol (PVA) is obtained by saponification of, for example, polyvinyl ester such as polyvinyl acetate. The degree of saponification of polyvinyl alcohol is generally 70 to 99.9% by mol. The polyvinyl acetal resin may be used singly or in combinations of two or more thereof.

The average degree of polymerization of the polyvinyl acetal resin is preferably 200 or more, more preferably 500 or more, further preferably 1000 or more, still further preferably 1500 or more. The average degree of polymerization is equal to or more than the lower limit, and thus penetration resistance of laminated glass is enhanced. The average degree of polymerization of the polyvinyl acetal resin is preferably 5000 or less, more preferably 4000 or less, further preferably 3500 or less. The average degree of polymerization is equal to or less than the upper limit, and thus the resin film is easily formed.

In a case where the content of the plasticizer is increased, the average degree of polymerization of the polyvinyl acetal resin is preferably increased. Accordingly, for example, in a case where the content (1) of the plasticizer in the first resin layer is, for example, 55 parts by mass or more, the average degree of polymerization of the polyvinyl acetal resin (1) is suitably 2000 or more, and may be 2500 or more.

The average degree of polymerization of the polyvinyl acetal resin (1) may be lower than, the same as, or higher than the average degrees of polymerization of polyvinyl acetal resins (for example, polyvinyl acetal resins (2) and (3)) in other resin layers. Herein, the average degree of polymerization of the polyvinyl acetal resin (1) is preferably higher than the average degree of polymerization of a polyvinyl acetal resin for forming another resin layer. Thus, in a case where the average degree of polymerization of the polyvinyl acetal resin (1) is increased, various performances are easily kept, for example, even if the content of the plasticizer in the first resin layer is increased.

The average degree of polymerization of a polyvinyl acetal resin is the same as the average degree of polymerization of PVA serving as a raw material of such a polyvinyl acetal resin, and the average degree of polymerization of PVA is determined by a method according to JIS K6726 "polyvinyl alcohol test method".

The aldehyde for use in acetalization is not particularly limited, an aldehyde having 1 to 10 carbon atoms is suitably used, an aldehyde having 3 to 5 carbon atoms is more preferable, an aldehyde having 4 or 5 carbon atoms is further preferable, and an aldehyde having 4 carbon atoms is particularly preferable.

The aldehyde having 1 to 10 carbon atoms is not particularly limited, and examples thereof include formaldehyde, acetaldehyde, propionaldehyde, n-butyraldehyde, isobutyraldehyde, n-valeraldehyde, 2-ethylbutyraldehyde, n-hexylaldehyde, n-octylaldehyde, n-nonylaldehyde, n-decylaldehyde and benzaldehyde. In particular, acetaldehyde, propionaldehyde, n-butyraldehyde, isobutyraldehyde, n-hexylaldehyde or n-valeraldehyde is preferable, propionaldehyde, n-butyraldehyde, isobutyraldehyde or n-valeraldehyde is more preferable, n-butyraldehyde or n-valeraldehyde is further preferable, and n-butyraldehyde is most preferable. The aldehyde may be used singly or in combinations of two or more thereof.

The number of carbon atoms in an acetal group contained in the polyvinyl acetal resin is not particularly limited, and is preferably 1 to 10, more preferably 3 to 5, further preferably 4 or 5, particularly preferably 4. A specific acetal group is particularly preferably a butyral group, and accordingly, the polyvinyl acetal resin is preferably a polyvinyl butyral resin. In other words, in the present invention, the thermoplastic resin (1) in the first resin layer is preferably a polyvinyl butyral resin and both the thermoplastic resins (1) and (2) in the first and second resin layers are more preferably polyvinyl butyral resins. In a case where the first to third resin layers are comprised, all the thermoplastic resins (1), (2), and (3) in the first to third resin layers are preferably polyvinyl butyral resins. In other words, in a case where the resin film comprises a plurality of resin layers, the thermoplastic resins in all the resin layers are preferably polyvinyl butyral resins.

The content rate (amount of hydroxyl group) of a hydroxyl group in the polyvinyl acetal resin (1) is preferably 17% by mol or more, more preferably 20% by mol or more, and is, for example, 38% by mol or less, preferably 34% by mol or less. The content rate of the hydroxyl group is equal to or more than the lower limit, and thus the resin film is much more increased in adhesion force. The content rate is more preferably 30% by mol or less, further preferably 27% by mol or less, from the viewpoint that the polyvinyl acetal resin (1) absorbs the plasticizer to enhance sound insulating performance of laminated glass. The content rate of a hydroxyl group in the polyvinyl acetal resin (1) is 20% by mol or more, resulting in a high reaction efficiency and excellent productivity.

The respective content rates of hydroxyl groups in the polyvinyl acetal resins (for example, polyvinyl acetal resins (2) and (3)) used in the resin layers other than the first resin layer are each, for example, 20% by mol or more, preferably 25% by mol or more, more preferably 28% by mol or more. The content rates of the hydroxyl groups are each equal to or more than the lower limit, and thus not only sound insulating performance is kept, but also flexural rigidity can be more enhanced. The respective content rates of hydroxyl groups in the polyvinyl acetal resins (for example, polyvinyl acetal resins (2) and (3)) used in the resin layers other than the first resin layer are each preferably 38% by mol or less, more preferably 36% by mol or less, further preferably 34% by mol or less. The content rates of the hydroxyl groups are equal to or less than the upper limit, and thus the polyvinyl acetal resin is easily precipitated in synthesis of the polyvinyl acetal resin.

The content rate of a hydroxyl group in the polyvinyl acetal resin (1) is lower than the content rate of a hydroxyl group in the polyvinyl acetal resin used in each of the resin layers other than the first resin layer from the viewpoint of a much more enhancement in sound insulating performance. Accordingly, the content rate of a hydroxyl group in the polyvinyl acetal resin (1) is preferably lower than the content rate of a hydroxyl group in the polyvinyl acetal resin (2). The content rate of a hydroxyl group in the polyvinyl acetal resin (1) is preferably lower than the content rate of a hydroxyl group in the polyvinyl acetal resin (3).

In a case where the content rate of a hydroxyl group in the polyvinyl acetal resin (1) is lower than the content rate of a hydroxyl group in the polyvinyl acetal resin used in each of the resin layers other than the first resin layer, the absolute value of the difference between these content rates is preferably 1% by mol or more. Thus, sound insulating performance can be much further enhanced. The absolute value of the difference between these content rates of hydroxyl groups is more preferably 5% by mol or more from such a viewpoint. The absolute value of the difference between these content rates of hydroxyl groups is preferably 20% by mol or less.

The content rate of a hydroxyl group in the polyvinyl acetal resin is the value obtained by expressing a molar fraction as a percentage, the molar fraction being determined by dividing the amount of an ethylene group to which a hydroxyl group is bound, by the amount of the entire ethylene group in a main chain. The amount of an ethylene group to which a hydroxyl group is bound can be measured according to, for example, JIS K6728 "polyvinyl butyral test method".

The degree of acetalization of the polyvinyl acetal resin (1) is preferably 47% by mol or more, more preferably 55% by mol or more, further preferably 60% by mol or more, and preferably 85% by mol or less, more preferably 80% by mol or less, further preferably 75% by mol or less. The degree of acetalization is equal to or more than the lower limit, and thus compatibility between the polyvinyl acetal resin (1) and the plasticizer is enhanced. The degree of acetalization is equal to or less than the upper limit, and thus the amount of the remaining aldehyde in the resin can be decreased. The degree of acetalization means the degree of butyralization in a case where the acetal group is a butyral group and the polyvinyl acetal resin (1) is a polyvinyl butyral resin.

The respective degrees of acetalization (degrees of butyralization in the case of a polyvinyl butyral resin) of the polyvinyl acetal resins (for example, polyvinyl acetal resins (2) and (3)) used in the resin layers other than the first resin layer are each preferably 55% by mol or more, more preferably 60% by mol or more, further preferably 63% by mol or more. The respective degrees of acetalization are each preferably 85% by mol or less, more preferably 80% by mol or less, further preferably 75% by mol or less. The degrees of acetalization are each equal to or more than the lower limit, and thus compatibility between the polyvinyl acetal resin and the plasticizer is enhanced. The degrees of acetalization are each equal to or less than the upper limit, and thus the amount of the remaining aldehyde in the resin can be decreased.

Each of the degrees of acetalization is the value obtained by expressing a molar fraction as a percentage, the molar fraction being determined by dividing the value obtained by subtracting the amount of an ethylene group to which a hydroxyl group is bound and the amount of an ethylene group to which an acetyl group is bound, from the amount of the entire ethylene group in a main chain, by the amount of the entire ethylene group in a main chain. The degree of acetalization (degree of butyralization) may be calculated from the result measured by a method according to JIS K6728 "polyvinyl butyral test method".

The degree of acetylation (amount of acetyl group) of the polyvinyl acetal resin (1) is preferably 0.01% by mol or more, more preferably 0.1% by mol or more. The degree of acetylation is further preferably 7% by mol or more, particularly preferably 9% by mol or more, from the viewpoint that compatibility between the polyvinyl acetal resin and the plasticizer is enhanced and a large amount of the plasticizer is easily compounded. The degree of acetylation of the polyvinyl acetal resin (1) is preferably 30% by mol or less, more preferably 25% by mol or less, further preferably 24% by mol or less, particularly preferably 20% by mol or less. The degree of acetylation is equal to or less than the upper limit, and thus the resin film is enhanced in moisture resistance.

The respective degrees of acetylation of the polyvinyl acetal resins (for example, polyvinyl acetal resins (2) and (3)) used in the resin layers other than the first resin layer are each preferably 10% by mol or less, more preferably 2% by mol or less. The degrees of acetylation are each equal to or less than the upper limit, and thus the resin film is enhanced in moisture resistance. The degrees are not particularly limited, and are each preferably 0.01% by mol or more, more preferably 0.1% by mol or more.

The degree of acetylation is the value obtained by expressing a molar fraction as a percentage, the molar fraction being determined by dividing the amount of an ethylene group to which an acetyl group is bound, by the amount of the entire ethylene group in a main chain. The amount of an ethylene group to which an acetyl group is bound can be measured according to, for example, JIS K6728 "polyvinyl butyral test method".

### (Ethylene-vinyl acetate copolymer resin)

The ethylene-vinyl acetate copolymer resin may be a non-crosslinked ethylene-vinyl acetate copolymer resin or a high-temperature crosslinked ethylene-vinyl acetate copolymer resin. The ethylene-vinyl acetate copolymer resin here used can also be an ethylene-vinyl acetate-modified resin such as a saponified product of an ethylene-vinyl acetate copolymer or a hydrolyzed product of ethylene-vinyl acetate.

The content of vinyl acetate in the ethylene-vinyl acetate copolymer resin, as measured according to JIS K 6730 "ethylene-vinyl acetate resin test method", is preferably 10 to 50% by mass, more preferably 20 to 40% by mass. The content of vinyl acetate is equal to or more than the lower limit value, and thus adhesiveness to, for example, a glass plate is improved and furthermore penetration resistance of laminated glass is easily improved in use of the resin film as an interlayer film for laminated glass. The content of vinyl acetate is equal to or less than the upper limit value, and thus rupture strength of the resin film is increased and impact resistance of laminated glass is improved.

### (Ionomer resin)

An ionomer resin is not particularly limited, and various ionomer resins can be used. Specific examples include an ethylene-based ionomer, a styrene-based ionomer, a perfluorocarbon-based ionomer, a telechelic ionomer and a polyurethane ionomer. In particular, an ethylene-based ionomer is preferable from the viewpoint that a screen is improved in, for example, mechanical strength, durability and/or transparency and from the viewpoint that, when a glass plate is inorganic glass, adhesiveness to such a glass plate is excellent.

An ionomer of an ethylene-unsaturated carboxylic acid copolymer is suitably used as the ethylene-based ionomer because of being excellent in transparency and toughness. The ethylene-unsaturated carboxylic acid copolymer is a copolymer having at least an ethylene-derived structural unit and an unsaturated carboxylic acid-derived structural unit, and may have other monomer-derived structural unit.

Examples of the unsaturated carboxylic acid include acrylic acid, methacrylic acid and maleic acid, and acrylic acid and methacrylic acid are preferable. Examples of such other monomer include acrylate, methacrylate and 1-butene.

The ethylene-unsaturated carboxylic acid copolymer preferably has 75 to 99% by mol of an ethylene-derived structural unit and preferably has 1 to 25% by mol of an unsaturated carboxylic acid-derived structural unit, under the assumption that all structural units in the copolymer correspond to 100% by mol.

The ionomer of the ethylene-unsaturated carboxylic acid copolymer is an ionomer resin obtained by at least partially neutralizing or crosslinking a carboxyl group in the ethylene-unsaturated carboxylic acid copolymer by a metal ion, and the degree of neutralization of the carboxyl group is usually 1 to 90%, preferably 5 to 85%.

Examples of an ion source in the ionomer resin include alkali metals such as lithium, sodium, potassium, rubidium and cesium, and polyvalent metals such as magnesium, calcium and zinc, and sodium and zinc are preferable.

The ionomer resin is not particularly limited in terms of the production method, and can be produced by a conventionally known production method. For example, in a case where the ionomer of the ethylene-unsaturated carboxylic acid copolymer is used as the ionomer resin, for example, ethylene and unsaturated carboxylic acid are radically copolymerized at a high temperature and at a high pressure, and thus the ethylene-unsaturated carboxylic acid copolymer is produced. The ethylene-unsaturated carboxylic acid copolymer and a metal compound comprising the ion source are reacted, and thus the ionomer of the ethylene-unsaturated carboxylic acid copolymer can be produced.

### (Polyurethane resin)

Examples of the polyurethane resin include polyurethane obtained by reacting an isocyanate compound and a diol compound, and polyurethane obtained by reacting an isocyanate compound, a diol compound, and a chain extender such as polyamine. The polyurethane resin may contain a sulfur atom. In this case, the diol may be partially or fully one selected from polythiol and sulfur-containing polyol. The polyurethane resin can improve adhesiveness to organic glass. Thus, the polyurethane resin is suitably used in a case where a glass plate is organic glass.

### (Thermoplastic elastomer)

Examples of the thermoplastic elastomer include a styrene-based thermoplastic elastomer and an aliphatic polyolefin. The styrene-based thermoplastic elastomer is not particularly limited, and known one can be used. The general styrene-based thermoplastic elastomer generally has a polymer block of a styrene monomer, serving as a hard segment, and a polymer block of a conjugated diene compound, or a hydrogenated block thereof, serving as a soft segment. Specific examples of the styrene-based thermoplastic elastomer include a styrene-isoprene diblock copolymer, a styrene-butadiene diblock copolymer, a styrene-isoprene-styrene triblock copolymer, a styrene-butadiene/isoprene-styrene triblock copolymer, a styrene-butadiene-styrene triblock copolymer, and hydrogenated products thereof.

The aliphatic polyolefin may be a saturated aliphatic polyolefin or an unsaturated aliphatic polyolefin. The aliphatic polyolefin may be a polyolefin with a linear olefin as a monomer, or a polyolefin with a cyclic olefin as a monomer. The aliphatic polyolefin is preferably a saturated aliphatic polyolefin, from the viewpoint that the resin film is effectively enhanced in storage stability and sound insulating performance.

Examples of the material of the aliphatic polyolefin include ethylene, propylene, 1-butene, trans-2-butene, cis-2-butene, 1-pentene, trans-2-pentene, cis-2-pentene, 1-hexene, trans-2-hexene, cis-2-hexene, trans-3-hexene, cis-3-hexene, 1-heptene, trans-2-heptene, cis-2-heptene, trans-3-heptene, cis-3-heptene, 1-octene, trans-2-octene, cis-2-octene, trans-3-octene, cis-3-octene, trans-4-octene, cis-4-octene, 1-nonene, trans-2-nonene, cis-2-nonene, trans-3-nonene, cis-3-nonene, trans-4-nonene, cis-4-nonene, 1-decene, trans-2-decene, cis-2-decene, trans-3-decene, cis-3-decene, trans-4-decene, cis-4-decene, trans-5-decene, cis-5-decene, 4-methyl-1-pentene and vinyl cylcohexane.

### (Plasticizer)

Hereinafter, the details of the respective plasticizers for use in the resin layers are described. In the following description, the respective plasticizers (for example, plasticizers (1) to (3)) for use in the resin layers are collectively described.

Examples of the respective plasticizers for use in the resin layers include organic ester plasticizers such as a monobasic organic acid ester and a polybasic organic acid ester, and phosphorous plasticizers such as an organic phosphoric acid ester plasticizer and an organic phosphorus acid ester plasticizer. In particular, an organic ester plasticizer is preferable. The plasticizer is preferably a liquid plasticizer. The liquid plasticizer is a plasticizer which is liquid at ordinary temperature (23°C) and ordinary pressure (1 atm).

Examples of the monobasic organic acid ester include an ester of glycol and monobasic organic acid. Examples of the glycol include polyalkylene glycol where each alkylene unit has 2 to 4 carbon atoms, preferably 2 or 3 carbon atoms, and the number of such alkylene units repeated is 2 to 10, preferably 2 to 4. The glycol may also be a monoalkylene glycol where the number of carbon atoms is 2 to 4, preferably 2 or 3, and the number of repeating units is 1.

Specific examples of the glycol include ethylene glycol, diethylene glycol, triethylene glycol, tetraethylene glycol, propylene glycol, dipropylene glycol, tripropylene glycol, tetrapropylene glycol and butylene glycol.

Examples of the monobasic organic acid include an organic acid having 3 to 10 carbon atoms, and specifically include butyric acid, isobutyric acid, caproic acid, 2-ethylbutyric acid, 2-ethylpentanoic acid, heptylic acid, n-octylic acid, 2-ethylhexylic acid, n-nonylic acid and decylic acid.

A preferable monobasic organic acid ester is, for example, a compound represented by the following formula (1): 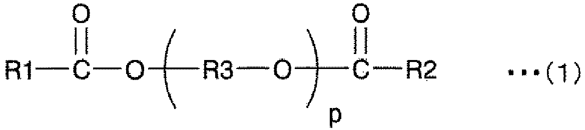 wherein R1 and R2 each represent an organic group having 2 to 10 carbon atoms, R3 represents an ethylene group, an isopropylene group or a n-propylene group, and p represents an integer of 3 to 10, and wherein R1 and R2 each preferably have 5 to 10 carbon atoms, more preferably 6 to 10 carbon atoms. The organic groups in R1 and R2 are each preferably a hydrocarbon group, more preferably an alkyl group.

Specific examples of the glycol ester include ethylene glycol di-2-ethylbutyrate, 1,2-propylene glycol di-2-ethylbutyrate, 1,3-propylene glycol di-2-ethylbutyrate, 1,4-butylene glycol di-2-ethylbutyrate, 1,2-butylene glycol di-2-ethylbutyrate, diethylene glycol di-2-ethylbutyrate, diethylene glycol dicapryate, diethylene glycol di-2-ethylhexanoate, dipropylene glycol di-2-ethylbutyrate, triethylene glycol di-2-ethylhexanoate, triethylene glycol dicaprylate, triethylene glycol di-2-ethylpentanoate, triethylene glycol di-n-heptanoate, triethylene glycol di-2-ethylbutyrate, triethylene glycol di-2-ethyl propanoate, tetraethylene glycol di-n-heptanoate, tetraethylene glycol di-2-ethylhexanoate and tetraethylene glycol di-2-ethylbutyrate.

Examples of the polybasic organic acid ester include an ester compound of a dibasic organic acid having 4 to 12 carbon atoms, such as adipic acid, sebacic acid or azelaic acid, and an alcohol having 4 to 10 carbon atoms. The alcohol having 4 to 10 carbon atoms may be straight, may have a branched structure, or may have a cyclic structure.

Specific examples include dibutyl sebacate, dioctyl azelate, dihexyl adipate, dioctyl adipate, hexylcyclohexyl adipate, diisononyl adipate, heptylnonyl adipate, di-(2-butoxyethyl) adipate, dibutylcarbitol adipate and mixed adipate. For example, oil-modified sebacic acid alkyd may also be adopted. Examples of the mixed adipate include an adipate produced from two or more alcohols selected from an alkyl alcohol having 4 to 9 carbon atoms and a cyclic alcohol having 4 to 9 carbon atoms.

Examples of the organic phosphorus-based plasticizer include phosphates such as tributoxyethyl phosphate, isodecylphenyl phosphate, and triisopropyl phosphate.

The plasticizer may be used singly or in combinations of two or more kinds thereof.

The plasticizer is, in particular, preferably selected from di-(2-butoxyethyl) adipate (DBEA), triethylene glycol di-2-ethylhexanoate (3GO), triethylene glycol di-2-ethylbutyrate (3GH) and triethylene glycol di-2-ethylpropanoate, more preferably selected from triethylene glycol di-2-ethylhexanoate (3GO), triethylene glycol di-2-ethylbutyrate (3GH) and triethylene glycol di-2-ethylpropanoate, further preferably selected from triethylene glycol di-2-ethylhexanoate and triethylene glycol di-2-ethylbutyrate, particularly preferably triethylene glycol di-2-ethylhexanoate.

### [Other additive(s)]

The resin film of the present invention preferably comprises at least one additive selected from the group consisting of an ultraviolet absorber, an antioxidant, and a light stabilizer. The resin film of the present invention, which comprises such additive(s), thus can be enhanced in durability, and allows an image displayed to be improved even after use under an environment of irradiation with solar light or the like for a long period. The resin film more preferably comprises at least an ultraviolet absorber and an antioxidant, further preferably comprises all of an ultraviolet absorber, an antioxidant and a light stabilizer from the viewpoint of a more enhancement in durability.

The additive(s) may be comprised in at least the light diffusion layer, and are/is also preferably comprised in other resin layers (for example, second resin layer, or second and third resin layers), in addition to the light diffusion layer.

The light diffusion layer, in particular, more preferably comprises an ultraviolet absorber and an antioxidant, further preferably comprises all of an ultraviolet absorber, an antioxidant, and a light stabilizer. Not only the light diffusion layer, but also other resin layers (for example, second resin layer, or second and third resin layers) more preferably comprise(s) an ultraviolet absorber and an antioxidant, further preferably comprise(s) all of an ultraviolet absorber, an antioxidant, and a light stabilizer.

### (Ultraviolet absorber)

The ultraviolet absorber here used can be, for example, a malonate backbone-containing compound, an oxalic anilide backbone-containing compound, benzotriazole backbone-containing compound, a benzophenone backbone-containing compound, a triazine backbone-containing compound, a benzoate backbone-containing compound, or a hindered amine backbone-containing compound. In particular, a benzotriazole backbone-containing compound (benzotriazole-based compound) is preferable.

The ultraviolet absorber absorbs ultraviolet light contained in solar light or the like to prevent the resin film from being degraded by irradiation with solar light or the like, resulting in an enhancement in durability.

Preferred specific examples of the benzotriazole-based compound include a compound represented by the following general formula (2): 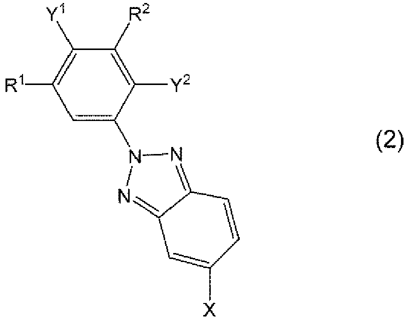 wherein R¹ represents a hydrogen atom, an alkyl group having 1 to 8 carbon atoms, or an alkoxycarbonylalkyl group having 4 to 20 carbon atoms, and R² represents a hydrogen atom, or an alkyl group having 1 to 8 carbon atoms; X represents a halogen atom or a hydrogen atom; and Y¹ and Y² each independently represent a hydroxyl group or a hydrogen atom, and at least any one of Y¹ and Y² represents a hydroxyl group.

In the formula (1), the alkyl groups in R¹ and R² may each have a straight structure or a branched structure. The alkoxycarbonylalkyl group may have a straight structure or a branched structure. Examples of R¹ and R² include a hydrogen atom, a methyl group, an ethyl group, a n-propyl group, an iso-propyl group, a n-butyl group, a tert-butyl group, a pentyl group, a hexyl group, and an octyl group. Examples of R¹ additionally include a methoxycarbonylpropyl group and an octyloxycarbonylpropyl group. In particular, R¹ preferably represents a hydrogen atom or an alkyl group, particularly preferably a hydrogen atom, a methyl group, a tert-butyl group, a pentyl group, or an octyl group. R¹ and R² may be the same as or different from each other.

Examples of the halogen atom in X include a fluorine atom, a chlorine atom, a bromine atom, and an iodine atom, and a chlorine atom is preferable.

Only any one of Y¹ and Y² may represent a hydroxyl group, or both thereof may represent hydroxyl groups. It is preferable that at least Y² represent a hydroxyl group.

Specific examples of the compound represented by the formula (1) include 2-(3-t-butyl-5-methyl-2-hydroxyphenyl)-5-chlorobenzotriazole, 2-(3,5-di-t-butyl-2-hydroxyphenyl)-5-chlorobenzotriazole, octyl 3-[3-tert-butyl-5-(5-chloro-2H-benzotriazol-2-yl)-4-hydroxyphenyl]propionate, methyl 3-(5-chloro-2H-benzotriazol-2-yl)-5-(1,1-dimethylethyl)-4-hydroxyphenylpropionate, 2-(3,5-di-tert-amyl-2-hydroxyphenyl)benzotriazole, and 2-(2,4-dihydroxyphenyl)-2H-benzotriazole.

The ultraviolet absorber may be used singly or in combinations of two or more kinds thereof.

The content of the ultraviolet absorber in each of the resin layers (for example, light diffusion layer, second and third resin layers) is preferably 0.01 parts by mass or more and 2 parts by mass or less based on 100 parts by mass of the thermoplastic resin. The content is 0.01 parts by mass or more, and thus each of the resin layers can be appropriately prevented from being degraded due to ultraviolet light contained in solar light and can also be enhanced in durability. The content is 2 parts by mass or less, and thus the ultraviolet absorber can allow the resin layer to be prevented from being colored and the effect corresponding to the content is also easily exerted.

The content of the ultraviolet absorber is more preferably 0.05 parts by mass or more and 1.5 parts by mass or less, further preferably 0.1 parts by mass or more and 1.1 parts by mass or less based on 100 parts by mass of the thermoplastic resin.

### (Antioxidant)

Examples of the antioxidant include a phenol-based compound, a phosphoric acid-based compound, and a sulfur-based compound. The antioxidant allows the resin film to be prevented from being oxidized and degraded, and to be enhanced in durability. In particular, a phenol-based compound is suitable from the viewpoint of an enhancement in durability.

Examples of the phenol-based compound include 2,6-di-t-butyl-p-cresol (BHT), butylated hydroxyanisole (BHA), 2,6-di-t-butyl-4-ethylphenol, stearyl-β-(3,5-di-t-butyl-4-hydroxyphenyl)propionate, 2,2'-methylenebis-(4-methyl-6-butylphenol), 2,2'-methylenebis-(4-ethyl-6-t-butylphenol), 4,4'-butylidene-bis-(3-methyl-6-t-butylphenol), 1,1,3-tris-(2-methyl-hydroxy-5-t-butylphenyl)butane, tetrakis[methylene-3-(3',5'-butyl-4-hydroxyphenyl)propionate]methane, 1,3,3-tris-(2-methyl-4-hydroxy-5-t-butylphenol)butane, 1,3,5-trimethyl-2,4,6-tris(3,5-di-t-butyl-4-hydroxybenzyl)benzene, bis(3,3'-t-butylphenol)butyric acid glycol ester, and pentaerythritol tetrakis[3-(3,5-di-tert-butyl-4-hydroxyphenyl)propionate].

Examples of the phosphoric acid-based compound include trisnonylphenyl phosphite, tridecyl phosphite, 2-ethyl-2-butylpropylene-4,6-tri-tert-butylphenol phosphite, 9,10-dihydro-9-oxa-10-phosphaphenanthrene, tetra(tridecyl)isopropylidenediphenol diphosphite, and tris[2-tert-butyl-4-(3-tert-hydroxy-5-methylphenylthio)-5-methylphenyl]phosphite.

Examples of the sulfur-based compound include dialkyl thiodipropionates such as dilauryl thiodipropionate, dimyristyl thiodipropionate, and distearyl thiodipropionate, and β-alkylmercaptopropionates of polyols, such as pentaerythritol tetra(β-dodecylmercaptopropionate).

The antioxidant may be used singly or in combinations of two or more kinds thereof.

The content of the antioxidant in each of the resin layers (for example, light diffusion layer, second and third resin layers) is preferably 0.01 parts by mass or more and 2 parts by mass or less based on 100 parts by mass of the thermoplastic resin. The content is 0.01 parts by mass or more, and thus the resin film can be appropriately prevented from being oxidized and degraded and can be enhanced in durability. The content is 2 parts by mass or less, and thus the effect corresponding to the content is also easily exerted.

The content of the ultraviolet absorber is more preferably 0.04 parts by mass or more and 1.5 parts by mass or less, further preferably 0.06 parts by mass or more and 1.1 parts by mass or less based on 100 parts by mass of the thermoplastic resin.

### (Light stabilizer)

The light stabilizer is preferably a hindered amine light stabilizer. The light stabilizer allows the resin film to be prevented from being degraded due to irradiation with ultraviolet light contained in solar light or the like.

Examples of the hindered amine light stabilizer include a hindered amine light stabilizer where an alkyl group, an alkoxy group or a hydrogen atom is bound to a nitrogen atom of a piperidine structure. A hindered amine light stabilizer where an alkyl group or an alkoxy group is bound to a nitrogen atom of a piperidine structure is preferable from the viewpoint of much more suppression of degradation. The hindered amine light stabilizer is preferably a hindered amine light stabilizer where an alkyl group is bound to a nitrogen atom of a piperidine structure, or also preferably a hindered amine light stabilizer where an alkoxy group is bound to a nitrogen atom of a piperidine structure.

The light stabilizer may be used singly or in combinations of two or more kinds thereof.

Examples of the hindered amine light stabilizer where an alkyl group is bound to a nitrogen atom of a piperidine structure include "Tinuvin 765" and "Tinuvin 622SF" manufactured by BASF SE, and "Adeka Stab LA-52" manufactured by ADEKA Corporation.

Examples of the hindered amine light stabilizer where an alkoxy group is bound to a nitrogen atom of a piperidine structure include "Tinuvin XT-850FF" and "Tinuvin XT-855FF" manufactured by BASF SE, and "Adeka Stab LA-81" manufactured by ADEKA Corporation.

Examples of the hindered amine light stabilizer where a hydrogen atom is bound to a nitrogen atom of a piperidine structure include "Tinuvin 770DF" manufactured by BASF SE and "Hostavin N24" manufactured by Clariant AG.

The content of the light stabilizer in each of the resin layers (for example, light diffusion layer, second and third resin layers) is preferably 0.001 parts by mass or more and 0.5 parts by mass or less based on 100 parts by mass of the thermoplastic resin. The content is 0.001 parts by mass or more, and thus the resin film can be appropriately prevented from being degraded due to ultraviolet light or the like and can be enhanced in durability. The content is 0.5 parts by mass or less, and thus the effect corresponding to the content is also easily exerted.

The content of the light stabilizer is preferably 0.005 parts by mass or more and 0.4 parts by mass or less, more preferably 0.01 parts by mass or more and 0.2 parts by mass or less based on 100 parts by mass of the thermoplastic resin.

Each of the resin layers constituting the resin film may, if necessary, appropriately comprise an infrared absorber, a fluorescent whitener, a crystal nucleator, a carboxylic acid metal salt, a heat shield material and/or the like, in addition to the additive(s).

### [Method for producing resin film]

The resin film can be produced by obtaining a resin composition for formation of each of the layers, forming each of the layers (for example, first resin layer, second resin layer, and third resin layer) constituting the resin film, from the resin composition, and, if necessary, laminating the layers for integration. In the case of a plurality of layers, the resin film can also be produced by forming each of the layers constituting the resin film, by co-extrusion or the like and also laminating the layers for integration.

The resin composition for formation of each of the layers may be obtained by mixing components constituting the resin composition, for example, the thermoplastic resin, and the light diffusion particle, the plasticizer, and other additive(s), if necessary, compounded, in a kneading apparatus or the like by a known method. For example, in a case where each of the layers constituting the resin film is formed using an extruder such as a co-extruder, the components constituting the resin composition may be mixed in the extruder.

### <Laminated glass>

The present invention further provides a laminated glass. The laminated glass of the present invention comprises paired glass members and the resin film placed between the paired glass members. The resin film may be used as an interlayer film for laminated glass, and the paired glass members may be bonded with the resin film being interposed. The configuration of the resin film in the laminated glass is as described above, and the description thereof is omitted. The laminated glass is typically used as a screen, as described below.

The glass members in the laminated glass are respectively laminated on both surfaces of a resin film 10. For example, as illustrated in Fig. 1, glass members 21 and 22 may be respectively laminated on both surfaces of a first resin layer 11 in the resin film 10 comprising the first resin layer 11 as a single layer. As illustrated in Fig. 2, one glass member 21 may be laminated on a surface of a second resin layer 12 and other glass member 22 may be laminated on a surface of a first resin layer 11, in a resin film 16 comprising the first resin layer 11 and the second resin layer 12. As illustrated in Fig. 3, one glass member 21 may be laminated on a surface of a second resin layer 12 and other glass member 22 may be laminated on a surface of a third resin layer 13 in a resin film 17 comprising first to third resin layers 11, 12, and 13.

### (Glass member)

The glass member for use in the laminated glass may be a glass plate. The glass plate may be either inorganic glass or organic glass, and inorganic glass is preferable. The inorganic glass is not particularly limited, and examples thereof include clear glass, clear float glass, float plate glass, reinforced glass, colored glass, polished plate glass, figured glass, meshed plate glass, wired plate glass, ultraviolet absorption plate glass, infrared reflection plate glass, infrared absorption plate glass and green glass.

The organic glass here used is one generally called resin glass and is not particularly limited, and examples thereof include organic glass formed from, for example, a polycarbonate plate, a polymethyl methacrylate plate or a polyester plate.

The respective materials forming such two glass members may be the same as or different from each other. For example, one thereof may be inorganic glass and the other thereof may be organic glass, and preferably both the two glass members are inorganic glass or organic glass.

The respective thicknesses of the glass members are not particularly limited, and are each preferably 0.5 mm or more and 5 mm or less, more preferably 0.7 mm or more and 3 mm or less.

The method for producing the laminated glass is not particularly limited. For example, the resin film is sandwiched between the two glass members, and these members are allowed to pass through a pressing roll or are placed in a rubber bag and evacuated under reduced pressure, to thereby allow air remaining between the two glass members and the resin film to be degassed. Thereafter, the glass members are preliminarily bonded with the resin film at about 70 to 110°C, to obtain a laminate. Next, the laminate is placed in an autoclave or pressed, and then is compression bonded at about 120 to 150°C and at a pressure of 1 to 1.5 MPa. Thus, the laminated glass can be obtained. In production of the laminated glass, the laminated glass may also be produced, for example, with a plurality of resin layers being laminated for integration to thereby form the resin film.

### [Screen]

In one embodiment of the present invention, the resin film is used for a screen. The screen is a screen for image display. Specifically, one surface of the laminated glass may be irradiated with light from a light source apparatus constituting a projector or the like, and the light for irradiation may be scattered on the resin film and displayed in the form of an image on the screen. The screen is preferably the above laminated glass, but is not necessarily the laminated glass as long as it comprises the above resin film. The screen may be, for example, a screen of so-called outer sticking, where the resin film adheres to one surface of one glass member and the resin film does not adhere to another glass member. The same glass member as the glass member described above may also be used in a screen other than the laminated glass.

The image display screen may be a rear-projection or front projection image display screen, and is preferably a rear-projection image display screen. Use in the form of rear-projection allows image display at a high contrast to be easily realized.

A rear-projection image display screen is a screen for which allows one surface of the laminated glass to be irradiated with light from a light source apparatus and allows an image to be observed from other surface of the laminated glass. A front projection image display screen is a screen which allows one surface of the laminated glass to be irradiated with light from a light source apparatus and allows an image to be observed from such one surface of the laminated glass (namely, a surface irradiated with light from a light source apparatus).

The screen of the present invention may be such that the x value and the y value of chromaticity coordinates (CIE1931) of transmitted light in irradiation with simulated solar light by a solar simulator are respectively 0.25 or more and 0.4 or less and 0.25 or more and 0.4 or less. The screen has the x value and the y value, and thus, when used as a screen for screen display, can realize image display high in color reproducibility.

Suitable values of the x value and the y value in the screen are respectively the same as the x value and the y value mentioned with respect to the laminated glass produced by adhesion of two sheets of standard glass with the resin film being interposed.

A suitable value of the maximum intensity A/maximum intensity B and a suitable value of the maximum intensity A/maximum intensity C, and a suitable value of the brightness, of transmitted light in irradiation with simulated solar light by a solar simulator, in the screen of the present invention, are also respectively the same as the values mentioned with respect to the laminated glass produced by adhesion of two sheets of standard glass with the resin film being interposed.

The x value, the y value, the brightness, and the maximum intensities in the screen may be each determined by irradiation of any one surface of the screen with simulated solar light and measurement on other surface thereof. The details of the methods for measuring the chromaticity, maximum intensities, and brightness are as described in Examples.

Furthermore, suitable values of the transmittance and the haze value of the screen of the present invention are respectively the same as the values described with respect to the laminated glass produced by adhesion of the two sheets of standard glass with the resin film being interposed, and the description thereof is omitted. The transmittance of the screen can be determined by measurement according to JIS R3212 (2015), and the haze value thereof can be measured according to JIS K6714.

The present invention also provides an image display system where the laminated glass is used in an image display screen, as described above. The image display system comprises the laminated glass and a light source apparatus for irradiation of one surface of the laminated glass with light, and displays an image on the laminated glass by light from the light source apparatus. The image display system may be either rear-projection one or front projection one, as described above, and is preferably rear-projection one.

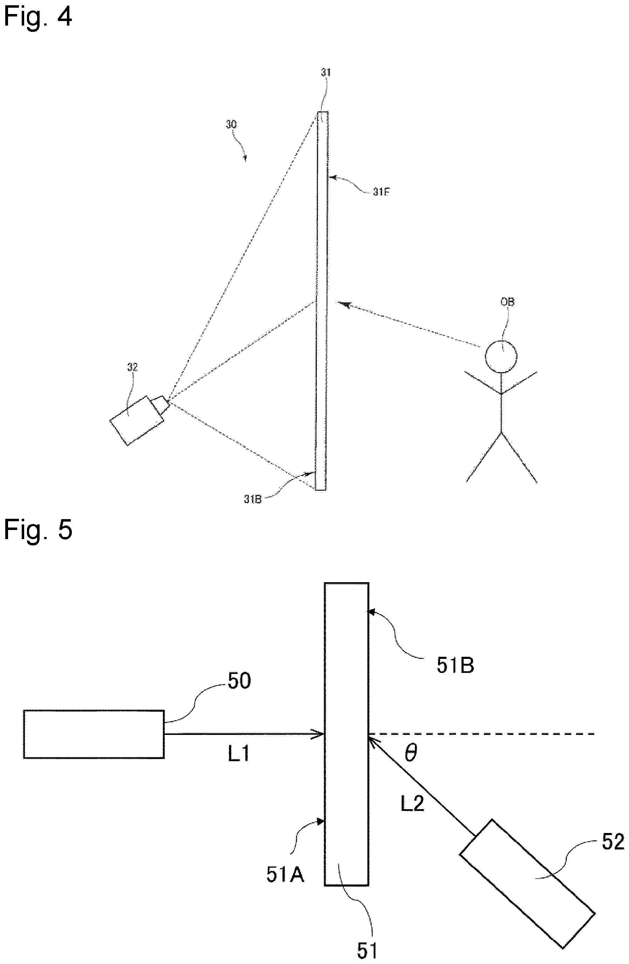

Hereinafter, one embodiment of the rear-projection image display system is described in detail with reference to Fig. 4.

An image display system 30 according to one embodiment of the present invention comprises laminated glass 31 and a light source apparatus 32. The laminated glass 31 may have any structure of the laminated glass described above. The image display system 30 allows one surface (rear surface 31B) of the laminated glass 31 to be irradiated with light by the light source apparatus 32 and allows an image to be displayed by the light for irradiation, from other surface (front surface 31F) of the laminated glass 31. The image at the front surface 31F side is viewed by an observer OB located in front of the laminated glass 31. The image displayed from the front surface 31F may be a screen image such as a moving image, or may be, for example, a still image, a message including a character, an icon and/or a trademark, or a logo, and is not particularly limited.

The light source apparatus 32 used can be a light source conventionally used in a rear-projection image display system, and is, for example, a projector capable of producing various images such as a screen image. The projector used is preferably, for example, a screen image display system using a digital mirror device, known as a so-called DLP (registered trademark) projector.

In a case where, for example, a fixed icon and a fixed message are displayed with no change of an image produced, no projector is needed to be used and a light source apparatus for irradiating the laminated glass 31 with certain light depending on the image may be used.

The light for irradiating the laminated glass 31 in the rear-projection system is light corresponding to an image mirror-reversed relative to an image displayed. The method of irradiation with the light corresponding to the image mirror-reversed is not particularly limited, and mirror-reversing may be made by adjustment of an image signal or by use of, for example, a reversing mirror.

The light emitted from the light source apparatus 32 in the image display system 30 may be used for direct irradiation of the laminated glass 31, or for irradiation of the laminated glass 31 via an optical member such as a reflecting mirror or a reversing mirror. A screen other than the laminated glass may be used instead of the laminated glass in the image display system 30.

The resin film, the laminated glass and the screen of the present invention can be used in various fields, and are used in, for example, various types of window glass. More specifically, these can be used in window glass for conveyances such as automobiles, railway vehicles, airplanes and marine vessels, or window glass for buildings. The resin film, the laminated glass or the screen can be used in various types of window glass, to thereby allow various images such as a screen image, a message and a logo to be displayed in window glass. The resin film, the laminated glass or the screen can also be used in a display for various electric instruments such as household electric instruments. In particular, the resin film, the laminated glass or the screen is preferably used in window glass, and is more preferably used in window glass for automobiles. The window glass for automobiles can be used in any of windshield, side glass, and rear glass, because the transmittance can be increased as described above.

For example, in the case of use in window glass for buildings, a light source apparatus may be disposed in each of such buildings, an inside surface of the window glass may be irradiated with light from the light source apparatus, and thus various images may be displayed on an outside surface of the window glass. Similarly, in the case of use in window glass for conveyances, a light source apparatus may be disposed in each of such conveyances and thus various images may be displayed on an outside surface of the window glass.

An outside surface of window glass for buildings or conveyances may also be irradiated with light from a light source apparatus and thus an image may also be displayed on an inside surface of the window glass. Specifically, a light source apparatus may be disposed on, for example, a hood or a trunk of an automobile, windshield, side glass, rear glass and/or the like may be irradiated with light from outside, and thus an image may be displayed on an inside surface of such glass.

### Examples

The present invention is described in more detail with reference to Examples, but the present invention is not limited to such Examples at all.

Various physical properties were here measured and evaluated as follows.

### [Thickness of each resin layer]

The thickness of each resin layer was measured with a microscope "DSX500" manufactured by Olympus Corporation, by 10-point average.

### [Maximum thickness and minimum thickness of light diffusion layer]

The thickness of the light diffusion layer was measured at an interval of 5 cm along MD, with a microscope "DSX500" manufactured by Olympus Corporation, and the maximum value and the minimum value thereof were respectively defined as the maximum thickness and the minimum thickness of the light diffusion layer.

### [Average particle size of light diffusion particle]

The average particle size of the light diffusion particle was measured with "LA-960" manufactured by Horiba Ltd., by a laser diffraction/scattering method.

### [Transmittance]

The transmittance of each laminated glass obtained in Examples and Comparative Examples was determined by measuring the visible light transmittance with a spectrophotometer ("U-4100" manufactured by Hitachi High-Tech Science Corporation) according to JIS R3212 (2015).

### [Haze value]

The haze values obtained in Examples and Comparative Examples were those measured with HAZE METER "HM-150N" manufactured by Murakami Color Research Laboratory, according to JIS K6714.

### [x value, y value, brightness, and maximum intensities A, B and C]

In a dark room, as illustrated in Fig. 5, an output end 50 of a solar simulator ("HAL-320W" manufactured by Asahi Spectra Co., Ltd.) was placed at a position of 30 cm (distance L1) apart in a direction perpendicular to one surface 51A of a laminated glass 51, and the laminated glass was irradiated with simulated solar light. The chromaticities (x value, y value) and the brightness on other surface 51B of the laminated glass 51 were measured with a brightness meter 52 ("SR-3AR" manufactured by Topcon Technohouse Corporation) located at a distance L2 of 35 cm from a measurement position of the other surface 51B of the laminated glass 51. Furthermore, the intensity at each wavelength was measured with the brightness meter 52. The maximum intensities in respective ranges, among the measurement results, were defined as maximum intensities A, B and C.

The measurement position was a position matched with the luminous flux center of simulated solar light for irradiation, and the chromaticities, the brightness, and the maximum intensities were each measured with the brightness meter 52, from a position at which the angle θ relative to a perpendicular direction of the other surface 51B was 45°, as illustrated in Fig. 5.

The output of the solar simulator was set to the maximum output of the solar simulator when the chromaticities and the maximum intensities A, B and C were measured, and the output was set to 30% of the maximum output when the brightness was measured.

### [Color reproducibility]

One surface of each laminated glass obtained in Examples and Comparative Examples was irradiated with each light of red, green and blue colors from a projector (trade name "IPSiO PJ X3241N" manufactured by Ricoh Co., Ltd.), and the laminated glass was observed from other surface thereof. A case where each light of all red, green and blue colors looked the same as the light for irradiation was evaluated as "A", and a case where light of even any one of red, green and blue colors looked discolored was evaluated as "B".

### [Durability]

One surface of each laminated glass obtained was irradiated with ultraviolet light (quartz glass mercury lamp, 750 W) by use of an ultraviolet light irradiation apparatus (HLG-2S manufactured by Suga Test Instruments Co., Ltd.) for 2000 hours, by a method according to JIS R3205 2005. The laminated glass before irradiation with ultraviolet light for 2000 hours and that after irradiation with ultraviolet light for 2000 hours were each irradiated with simulated solar light by a solar simulator, and L*a*b* here was measured to determine ΔE. ΔE was here a distance between two points on an L*a*b* color space, as measured before and after the irradiation with ultraviolet light. Measurement of L*a*b* was performed with a solar simulator and a brightness meter by the same method as in measurement of the x value and the y value.
A: ΔE of less than 5
B: ΔE of 5 or more

Each component used in Examples and Comparative Examples is as follows.

### (Polyvinyl acetal resin)

PVB 1: polyvinyl butyral resin, average degree of polymerization: 1700; amount of hydroxyl group: 30.5% by mol; degree of acetylation: 1% by mol; degree of acetalization: 68.5% by mol

PVB 2: polyvinyl butyral resin, average degree of polymerization: 3000, amount of hydroxyl group: 24% by mol; degree of acetylation: 12% by mol; degree of acetalization: 64% by mol

### (Plasticizer)

### 3GO: triethylene glycol-di-2-ethylhexanoate

### (Light diffusion particle)

Silver nanoparticle: particle having average particle size of 200 nm and particle size distribution of 45 to 350 nm, and having core-shell structure having silver particle serving as core and composite of silica, alumina and polyvinylpyrrolidone, serving as shell, "silver nanosphere" manufactured by Lux Labs, Inc.

Nanodiamond: "DINNOVARE" manufactured by Daicel Corporation

Titanium oxide particle: particle having core-shell structure of titanium oxide particle serving as core ("titanium oxide nanosphere" manufactured by Lux Labs, Inc.)

### (Ultraviolet absorber)

Tinuvin 326: compound represented by formula (2), X: chlorine atom; R¹: methyl group; R²: tert-butyl group; Y¹: hydrogen atom; and Y²: hydroxyl group; trade name "Tinuvin 326" manufactured by BASF SE

### (Antioxidant)

BHT: 2,6-di-t-butyl-p-cresol

Irganox 1010: pentaerythritol tetrakis[3-(3,5-di-tert-butyl-4-hydroxyphenyl)propionate], product name "Irganox 1010" manufactured by BASF SE

### (Light stabilizer)

Tinuvin 765: hindered amine light stabilizer, product name "Tinuvin 765" manufactured by BASF SE

### [Example 1]

### (Production of resin film)

A resin composition for a first resin layer was obtained by kneading 100 parts by mass of PVB 1 as a polyvinyl acetal resin, 40 parts by mass of 3GO as a plasticizer and a silver nanoparticle as a light diffusion particle in a co-extruder. The silver nanoparticle was here added so that the content based on the total amount of the resin film was 0.0015% by mass. Each resin composition for second and third resin layers was also obtained by kneading 100 parts by mass of PVB 1 as a polyvinyl acetal resin and 40 parts by mass of 3GO as a plasticizer in a co-extruder.

The obtained resin compositions for first to third layers were co-extruded by the co-extruder, to thereby obtain a resin film (interlayer film) of a three-layer structure of a second resin layer having a thickness of 325 µm, a first resin layer having a thickness of 110 µm, and a third resin layer having a thickness of 325 µm. The size of the resin film was 30 cm × 30 cm.

### (Production of laminated glass)

Two sheets of clear glass (5 cm length × 5 cm width × 2.5 mm thickness, visible light transmittance 90.4%, manufactured by Central Glass Co., Ltd.) according to JIS R3202 (2011) and a resin film of 5 cm × 5 cm were prepared, and the resin film was sandwiched between the two sheets of clear glass, to obtain a laminate. The laminate was placed in a rubber bag, subjected to degassing at a degree of vacuum of 2.6 kPa for 20 minutes, thereafter transferred into an oven with being subjected to degassing, furthermore retained at 90°C for 30 minutes and pressed in vacuum, and temporarily compression bonded. The laminate temporarily compression bonded was compression bonded in an autoclave in conditions of 135°C and a pressure of 1.2 MPa for 20 minutes, to thereby obtain laminated glass including glass plate/second resin layer/first resin layer/third resin layer/glass plate.

### [Example 2, and Comparative Examples 1 and 2]

The procedures the same as in Example 1 were performed except that the type of each polyvinyl acetal resin for use in each resin composition, the amount of compounding of each plasticizer, the amount of compounding of each light diffusion particle and the thickness of each resin layer were changed as described in Table 1.

### [Examples 3 and 4]

The procedures the same as in Example 2 were performed except that each ultraviolet absorber, each antioxidant, and each light stabilizer, or each ultraviolet absorber and each antioxidant, described in Table 1, were added to each resin composition, in amounts of compounding described in Table 1.

### [Example 5]

### (Production of resin film)

A resin composition for a first resin layer was obtained by kneading 100 parts by mass of PVB 1 as a polyvinyl acetal resin, 40 parts by mass of 3GO as a plasticizer, a titanium oxide particle as a light diffusion particle, 0.2 parts by mass of an ultraviolet light inhibitor, and 0.2 parts by mass of an antioxidant in the extruder. The titanium oxide particle was here added so that the content based on the total amount of the first resin layer was 0.0015% by mass.

The obtained resin composition for a first layer was extruded by the extruder, to obtain a resin film of a single-layer structure of only a first resin layer having a thickness of 760 µm. The size of the resin film was 30 cm × 30 cm.

### (Production of laminated glass)

Two sheets of clear glass (5 cm length × 5 cm width × 2.5 mm thickness, visible light transmittance 90.4%, manufactured by Central Glass Co., Ltd.) according to JIS R3202 (2011) and a resin film of 5 cm × 5 cm were prepared, and the resin film was sandwiched between the two sheets of clear glass, to obtain a laminate. The laminate was placed in a rubber bag, subjected to degassing at a degree of vacuum of 2.6 kPa for 20 minutes, thereafter transferred into an oven with being subjected to degassing, furthermore retained at 90°C for 30 minutes and pressed in vacuum, and temporarily compression bonded. The laminate temporarily compression bonded was compression bonded in an autoclave in conditions of 135°C and a pressure of 1.2 MPa for 20 minutes, to thereby obtain laminated glass including glass plate/first resin layer/glass plate.

### [Example 6]

The procedures the same as in Example 4 were performed except that a titanium oxide particle was used instead of the silver nanoparticle as the light diffusion particle.

### [Examples 7 to 9]

The procedures the same as in Example 5 were performed except that the content of the titanium oxide particle based on the total amount of the first resin layer was changed as shown in Table 2.

### [Example 10]

The procedures the same as in Example 6 were performed except that the content of the titanium oxide particle based on the total amount of the first resin layer was changed as shown in Table 2.

**[Table 1]**

| | | | | Example 1 | Example 2 | Example 3 | Example 4 | Comparative Example 1 | Comparative Example 2 |
|---|---|---|---|---|---|---|---|---|---|
| | Light diffusion layer (first resin layer) | Thermoplastic resin | Type | PVB1 | PVB2 | PVB2 | PVB2 | PVB1 | PVB2 |
| | | Plasticizer | Type | 3GO | 3GO | 3GO | 3GO | 3GO | 3GO |
| | | | parts/phr | 40 | 60 | 60 | 60 | 40 | 60 |
| | | Ultraviolet absorber | Type | - | - | Tinuvin 326 | Tinuvin 326 | - | - |
| | | | parts/phr | - | - | 0.2 | 0.2 | - | - |
| | | Antioxidant | Type | - | - | Irganox 1010 | BHT | - | - |
| | | | parts/phr | - | - | 0.1 | 0.2 | - | - |
| | | Light stabilizer | Type | - | - | Tinuvin 765 | - | - | - |
| | | | parts/phr | - | - | 0.02 | - | - | - |
| | | Light diffusion particle | Type | Silver nanoparticle | Silver nanoparticle | Silver nanoparticle | Silver nanoparticle | Nanodiamond | Nanodiamond |
| | | | parts/% by weight | 0.01 | 0.01 | 0.01 | 0.01 | 0.01 | 0.01 |
| | | Thickness of diffusion layer | µm | 110 | 110 | 110 | 110 | 110 | 110 |
| | | Maximum thickness of diffusion layer | µm | 120 | 120 | 120 | 120 | 120 | 120 |
| Interlayer | | Minimum thickness of diffusion layer | µm | 100 | 100 | 100 | 100 | 100 | 100 |
| layer | Second and third resin layers | Thermoplastic resin | Type | PVB1 | PVB1 | PVB1 | PVB1 | PVB1 | PVB1 |
| | | Plasticizer | Type | 3GO | 3GO | 3GO | 3GO | 3GO | 3GO |
| | | | parts/phr | 40 | 38 | 38 | 38 | 40 | 38 |
| | | Ultraviolet absorber | Type | - | - | Tinuvin 326 | Tinuvin 326 | - | - |
| | | | parts/phr | - | - | 0.2 | 0.2 | - | - |
| | | Antioxidant | Type | - | - | Irganox 1010 | BHT | - | - |
| | | | parts/phr | - | - | 0.1 | 0.2 | - | - |
| | | Light stabilizer | Type | - | - | Tinuvin 765 | - | - | - |
| | | | parts/phr | - | - | 0.02 | - | - | - |
| | | Thickness of each resin layer | µm | 325 | 345 | 345 | 345 | 325 | 345 |
| | Layer configuration | | | Fig. 3 | Fig. 3 | Fig. 3 | Fig. 3 | Fig. 3 | Fig. 3 |
| | Total thickness of layers | | mm | 0.76 | 0.8 | 0.8 | 0.8 | 0.76 | 0.8 |
| | Content of light diffusion particle entire interlayer film) | | % by mass | 0.0015 | 0.0015 | 0.0015 | 0.0015 | 0.0015 | 0.0015 |
| Evaluation | Transmittance | | % | 84.4 | 84 | 84 | 84 | 72 | 72 |
| | Haze | | % | 2.7 | 2.5 | 2.5 | 2.5 | 2.7 | 2.9 |
| | Brightness | | cd/m2 | 1000 | 1000 | 1000 | 1000 | 1000 | 1021 |
| | Peak maximum intensity A wavelength | | nm | 446 | 458 | 458 | 458 | 450 | 450 |
| | Peak maximum intensity A intensity | | - | 1.52 | 1.3 | 1.3 | 1.3 | 0.861 | 0.861 |
| | Peak maximum intensity B wavelength | | nm | 553 | 553 | 553 | 553 | 548 | 548 |
| | Peak maximum intensity B intensity | | - | 1.96 | 1.96 | 1.96 | 1.96 | 0.298 | 0.298 |
| | Peak maximum intensity C wavelength | | nm | 579 | 579 | 579 | 579 | 584 | 584 |
| | Peak maximum intensity C intensity | | - | 1.5 | 1.5 | 1.5 | 1.5 | 0.133 | 0.133 |
| | Peak intensity A/Peak intensity B | | - | 0.78 | 0.66 | 0.66 | 0.66 | 2.89 | 2.89 |
| | Peak intensity A/Peak intensity C | | - | 1.01 | 0.87 | 0.87 | 0.87 | 6.47 | 6.47 |
| | Chromaticity diagram | | x | 0.3126 | 0.3156 | 0.3156 | 0.3156 | 0.2026 | 0.2026 |
| | | | y | 0.3654 | 0.3792 | 0.3792 | 0.3792 | 0.2039 | 0.2039 |
| | Reproducibility of color displayed | | | A | A | A | A | B | B |
| | Durability | | | B | B | A | A | B | B |

**[Table 2]**

| | | | | Example 5 | Example 6 | Example 7 | Example 8 | Example 9 | Example 10 |
|---|---|---|---|---|---|---|---|---|---|
| | Light diffusion layer (first resin layer) | Thermoplastic resin | Type | PVB1 | PVB2 | PVB1 | PVB1 | PVB1 | PVB2 |
| | | Plasticizer | Type | 3GO | 3GO | 3GO | 3GO | 3GO | 3GO |
| | | | parts/phr | 40 | 60 | 40 | 40 | 40 | 60 |
| | | Ultraviolet absorber | Type | Tinuvin 326 | Tinuvin 326 | Tinuvin 326 | Tinuvin 326 | Tinuvin 326 | Tinuvin 326 |
| | | | parts/phr | 0.2 | 0.2 | 0.2 | 0.2 | 0.2 | 0.2 |
| | | Antioxidant | Type | BHT | BHT | BHT | BHT | BHT | BHT |
| | | | parts/phr | 0.2 | 0.2 | 0.2 | 0.2 | 0.2 | 0.2 |
| | | Light stabilizer | Type | - | - | - | - | - | - |
| | | | parts/phr | - | - | - | - | - | - |
| | | Light diffusion particle | Type | Titanium oxide particle | Titanium oxide particle | Titanium oxide particle | Titanium oxide particle | Titanium oxide particle | Titanium oxide particle |
| | | | parts/% by weight | 0.0015 | 0.01 | 0.0008 | 0.0040 | 0.0080 | 0.05 |
| | | Thickness of diffusion layer | µm | 760 | 110 | 760 | 760 | 760 | 110 |
| | | Maximum thickness of diffusion layer | µm | 770 | 120 | 770 | 770 | 770 | 120 |
| Interlayer | | Minimum thickness of diffusion layer | µm | 750 | 100 | 750 | 750 | 750 | 100 |
| layer | Second and third resin layers | Thermoplastic resin | Type | | PVB1 | | | | PVB1 |
| | | Plasticizer | Type | | 3GO | | | | 3GO |
| | | | parts/phr | | 38 | | | | 38 |
| | | Ultraviolet absorber | Type | | Tinuvin 326 | | | | Tiriuvin 326 |
| | | | parts/phr | | 0.2 | | | | 0.2 |
| | | Antioxidant | Type | | BHT | | | | BHT |
| | | | parts/phr | | 0.2 | | | | 0.2 |
| | | Light stabilizer | Type | | - | | | | - |
| | | | parts/phr | | - | | | | - |
| | | Thickness of each resin layer | µm | | 345 | | | | 345 |
| | Layer configuration | | | Fig. 1 | Fig. 3 | Fig. 1 | Fig. 1 | Fig. 1 | Fig. 3 |
| | Total thickness of layers | | mm | 0.76 | 0.8 | 0.76 | 0.76 | 0.76 | 0.76 |
| | Content of light diffusion particle (entire interlayer film) | | % by mass | 0.0015 | 0.0015 | 0.0008 | 0.0040 | 0.0080 | 0.0080 |
| Evaluation | Transmittance | | % | 83.4 | 83.1 | 87.8 | 79 | 73 | 72.5 |
| | Haze | | % | 2.8 | 2.8 | 1 | 4.72 | 5.81 | 5.88 |
| | Brightness | | cd/m2 | 1319 | 1277 | 638 | 2419 | 3145 | 3147 |
| | Peak maximum intensity A wavelength | | nm | 456 | 458 | 456 | 456 | 456 | 458 |
| | Peak maximum intensity A intensity | | - | 1.4 | 1.3 | 1.4 | 1.4 | 1.4 | 1.3 |
| | Peak maximum intensity B wavelength | | nm | 554 | 553 | 554 | 554 | 554 | 553 |
| | Peak maximum intensity B intensity | | - | 1.96 | 1.96 | 1.96 | 1.96 | 1.96 | 1.96 |
| | Peak maximum intensity C wavelength | | nm | 579 | 579 | 579 | 579 | 579 | 579 |
| | Peak maximum intensity C intensity | | - | 1.5 | 1.5 | 1.5 | 1.5 | 1.5 | 1.5 |
| | Peak intensity A/Peak intensity B | | - | 0.71 | 0.66 | 0.71 | 0.71 | 0.71 | 0.66 |
| | Peak intensity A/Peak intensity C | | - | 0.93 | 0.87 | 0.93 | 0.93 | 0.93 | 0.87 |
| | Chromaticity diagram | | x | 0.3156 | 0.3156 | 0.3156 | 0.3156 | 0.3156 | 0.3156 |
| | | | y | 0.3792 | 0.3792 | 0.3792 | 0.3792 | 0.3792 | 0.3792 |
| | Reproducibility of color displayed | | | A | A | A | A | A | A |
| | Durability | | | A | A | A | A | A | A |

| | | | | | | | | | |
|---|---|---|---|---|---|---|---|---|---|
| * "parts/phr" in Tables 1 and 2 represents content (parts by mass) based on 100 parts by mass of polyvinyl acetal resin in each resin layer. * "parts/% by weight" in Tables 1 and 2 represents content (% by mass) of light diffusion particle in light diffusion layer. | | | | | | | | | |

As described above, in each of Examples, the x value and the y value of transmitted light in use of a specified light diffusion particle and in irradiation with simulated solar light were adjusted so as to be in the predetermined ranges, and thus color reproducibility in use for a screen for screen display could be improved.

In each of Examples 3 to 10, the ultraviolet absorber and the antioxidant, or the ultraviolet absorber, the antioxidant and the light stabilizer were compounded in the resin film, and thus ΔE was decreased and favorable image display could be realized for a long period even in the case of facilitating degradation due to irradiation with ultraviolet light.

On the contrary, the resin film in each of Comparative Examples, although contained the light diffusion particle, was not adjusted so that the x value and the y value of transmitted light in irradiation with simulated solar light were in the predetermined ranges, and thus color reproducibility in use for a screen for screen display could not be improved.

### Reference Signs List

10, 16, 17 resin film (interlayer film for laminated glass)
11 first resin layer (light diffusion layer)
12 second resin layer
13 third resin layer
21, 22 glass member
25, 26, 27, 31 laminated glass (screen)
30 image display system
32 light source apparatus
OB observer

## Claims

1. A resin film comprising a light diffusion layer comprising a light diffusion particle and a thermoplastic resin, an x value and a y value of chromaticity coordinates (CIE193 1) of transmitted light being respectively 0.25 or more and 0.4 or less and 0.25 or more and 0.4 or less, when a laminated glass obtained by adhesion of two sheets of clear glass having a thickness of 2.5 mm with the resin film being interposed is irradiated with simulated solar light by a solar simulator.

2. The resin film according to claim 1, wherein, when the laminated glass is irradiated with simulated solar light by a solar simulator, a ratio of a maximum intensity A at 430 to 460 nm to a maximum intensity B at 530 to 560 nm (maximum intensity A/maximum intensity B) of transmitted light is 1.0 or less.

3. The resin film according to claim 1 or 2, wherein, when the laminated glass is irradiated with simulated solar light by a solar simulator, a ratio of a maximum intensity A at 430 to 460 nm to a maximum intensity C at 560 to 600 nm (maximum intensity A/maximum intensity C) of transmitted light is 1.2 or less.

4. The resin film according to any one of claims 1 to 3, wherein a content of the light diffusion particle in 100% by mass of the resin film is 0.00001% by mass or more and 1% by mass or less.

5. The resin film according to any one of claims 1 to 4, wherein the light diffusion particle is at least one selected from the group consisting of a nanoparticle comprising at least any of a silver element and a titanium element, or nanodiamond.

6. The resin film according to any one of claims 1 to 5, wherein, when a thickness of the light diffusion layer is measured at an interval of 5 cm in one direction along a surface direction, a difference between a maximum thickness and a minimum thickness of the light diffusion layer is 40 µm or less.

7. The resin film according to any one of claims 1 to 6, further comprising at least one additive selected from the group consisting of an ultraviolet absorber, an antioxidant, and a light stabilizer.

8. The resin film according to claim 7, wherein the ultraviolet absorber is a benzotriazole-based compound.

9. The resin film according to claim 7 or 8, wherein the antioxidant is a phenol-based compound.

10. The resin film according to any one of claims 1 to 9, wherein the thermoplastic resin comprised in the light diffusion layer is a polyvinyl acetal resin.

11. The resin film according to any one of claims 1 to 10, wherein the light diffusion layer further comprises a plasticizer.

12. The resin film according to any one of claims 1 to 11, comprising three or more resin layers each comprising a thermoplastic resin, wherein
the three or more resin layers comprise the light diffusion layer and second and third resin layers, and
the light diffusion layer is placed between the second and third resin layers.

13. The resin film according to claim 12, wherein
a content of the plasticizer based on 100 parts by mass of the thermoplastic resin in the light diffusion layer is higher than each content of the plasticizer based on 100 parts by mass of the thermoplastic resin in each of the second and third resin layers.

14. The resin film according to claim 12 or 13, wherein the thermoplastic resin comprised in each of the second and third resin layers is a polyvinyl acetal resin.

15. The resin film according to any one of claims 1 to 14, wherein the resin film is an interlayer film for laminated glass.

16. A laminated glass comprising the resin film according to any one of claims 1 to 15, and paired glass members, wherein the resin film is placed between the paired glass members.

17. A screen having an x value and a y value of chromaticity coordinates (CIE1931) of transmitted light in irradiation with simulated solar light by a solar simulator, of respectively 0.25 or more and 0.4 or less and 0.25 or more and 0.4 or less.
